# EUROPEAN PATENT SPECIFICATION

(11) **EP 4 220 351 B1**
(45) Date of publication and mention of the grant of the patent: **19.03.2025**
(21) Application number: 21892156.7
(22) Date of filing: 12.10.2021
(51) Int. Cl.: G06F 1/20, G06F 1/16, H05K 7/20, H05K 9/00, H04M 1/02

(54) **ELECTRONIC DEVICE COMPRISING THERMAL DIFFUSION MEMBER**
ELEKTRONISCHE VORRICHTUNG MIT EINEM WÄRMEDIFFUSIONSELEMENT
DISPOSITIF ÉLECTRONIQUE COMPRENANT UN ÉLÉMENT DE DIFFUSION THERMIQUE

(30) Priority: 16.11.2020 KR 20200152860; 06.01.2021 KR 20210001200
(43) Date of publication of application: 02.08.2023
(73) Proprietor: Samsung Electronics Co., Ltd., Suwon-si, Gyeonggi-do 16677 (KR)
(72) Inventor: CHO, Baekeun, Suwon-si Gyeonggi-do 16677 (KR); KANG, Dongku, Suwon-si Gyeonggi-do 16677 (KR); PARK, Jinyong, Suwon-si Gyeonggi-do 16677 (KR); CHO, Chihyun, Suwon-si Gyeonggi-do 16677 (KR); JIN, Hyuncheol, Suwon-si Gyeonggi-do 16677 (KR); KIM, Bohyeon, Suwon-si Gyeonggi-do 16677 (KR)
(74) Representative: Gulde & Partner
(86) International application number: PCT/KR2021/013989
(87) International publication number: WO 2022/102986

(56) References cited:
- WO-A1-2019/245165
- CN-B- 109 699 151
- CN-U- 210 836 940
- KR-A- 20180 006 533
- KR-A- 20200 027 760
- US-A1- 2020 044 308
- US-A1- 2020 313 112

## Description

### [Technical Field]

The present invention relates to an electronic device comprising a thermal diffusion member.

### [Background Art]

The use of portable electronic devices such as smart phones is increasing, and various functions are provided by an electronic device.

The electronic device is being developed into a type that is easy to carry and in which a display can be expanded in a sliding manner to provide a wider screen to a user.

For example, in a sliding type or rollable type electronic device, a portion of the flexible display may be slid into the housing or slid out of the housing. Examples of such conventional devices is disclosed in US2020/313112 A1.

### [Disclosure of Invention]

### [Technical Problem]

An electronic device may arrange electronic components (e.g., a heat-generating component) such as an application processor (AP) and a communication processor (CP) on a printed circuit board and provide multimedia functions desired by a user.

Since various electronic components (e.g., APs, CPs, power amplifiers, and/or inductors) are integrated on a printed circuit board to provide various functions to users of the electronic device, a heat generation problem may occur.

If the electronic device does not diffuse and dissipate heat generated from various electronic components disposed on the printed circuit board to other areas or to the outside, the electronic components may not operate normally, and their life-time or service life may be shortened.

In order to overcome the above-mentioned problems, the present invention provides an electronic device including a thermal diffusion member capable of diffusing and dissipating heat generated from an electronic component (e.g., AP) to the outside of the electronic device during a sliding-out operation of the electronic device that is a sliding type or a rollable type. In addition, various embodiments are possible.

Technical problems to be solved in the present disclosure are not limited to the aforementioned technical problems, and other technical problems not described above may be evidently understood from the following description by a person having ordinary knowledge in the art to which the disclosure pertains.

### [Solution to Problem]

The present invention is defined by the appended set of claims. According to an embodiment of the present disclosure, an electronic device includes a first housing including a first support member and a second support member; a second housing slidably coupled to the first housing; a sliding plate having a first end coupled to the first support member, and having a second end arranged to slide at least partially in the second housing; a printed circuit board which is arranged between the first support member and the second support member, and which has at least one heat-generating component mounted on one surface thereof; a sliding driving unit, which is arranged on an inner surface of the sliding plate, has a first end coupled to the first support member, and has a second end coupled to one side surface of the sliding plate; a thermal diffusion member having a first side surface coupled to the first support member, and having a second side surface coupled to at least a portion of the sliding driving unit; and a flexible display supported by the first support member and the sliding plate, wherein the thermal diffusion member can be formed to be unfolded according to a sliding-out operation of the sliding driving unit and diffuse heat generated from the at least one heat-generating component. Other various embodiments are possible.

### [Advantageous Effects of Invention]

An electronic device according to various embodiments of the present disclosure may lower the surface temperature of the electronic device and improve the performance and lifespan of an electronic component by diffusing and dissipating the heat generated from a heat-generating component (e.g., an AP) to the outside of the electronic device during a sliding-out operation, using a thermal diffusion member provided to be foldable and unfoldable during a sliding in/out operation in conjunction with a sliding driving unit.

In addition to this, various effects identified directly or indirectly through this document may be provided.

### [Brief Description of Drawings]

Other aspects, advantages and salient features of the disclosure will become apparent to those skilled in the art from the following detailed description, which discloses various embodiments of the disclosure together with the accompanying drawings. In connection with the description of the drawings, the same or similar reference numerals may be used for the same or similar elements.
FIG. 1 is a block diagram of an electronic device in a network environment according to various embodiments.
FIGS. 2a and 2b are front and side views of an electronic device in a slide-in state and a slide-out state according to various embodiments.
FIGS. 3a and 3b are diagrams illustrating a rear surface of an electronic device in a slide-in state and a slide-out state according to various embodiments.
FIG. 4 is a diagram schematically illustrating a cross section of the C-C' line of the electronic device disclosed in FIG. 3a.
FIG. 5 is an exploded perspective view schematically illustrating an electronic device including a thermal diffusion member according to various embodiments.
FIGS. 6 and 7 are views each illustrating respective portions of an electronic device including a sliding driving unit and a thermal diffusion member according to various embodiments.
FIG. 8 is a diagram schematically illustrating a configuration of a thermal diffusion member of an electronic device according to various embodiments.
FIG. 9 is a diagram illustrating a temperature change of a thermal diffusion member of an electronic device according to various embodiments.
FIG. 10 is a diagram schematically illustrating configurations of a sliding driving unit and a thermal diffusion member of an electronic device according to various embodiments.
FIG. 11 is a diagram schematically illustrating an example of a thermal diffusion member of an electronic device according to various embodiments.
FIGS. 12a to 12f are diagrams illustrating temperature changes in accordance with the number of thermal diffusion members of an electronic device according to various embodiments.
FIG. 13 is a diagram schematically illustrating various embodiments of a thermal diffusion member of an electronic device according to various embodiments not covered by the claimed invention.
FIG. 14 is a diagram schematically illustrating a cross section of the electronic device disclosed in FIG. 13 along line d-d'.
FIG. 15 is a diagram illustrating a temperature change of the thermal diffusion member of FIG. 13.
FIG. 16 is a diagram schematically illustrating various embodiments of a thermal diffusion member of an electronic device according to various embodiments.

### [Mode for the Invention]

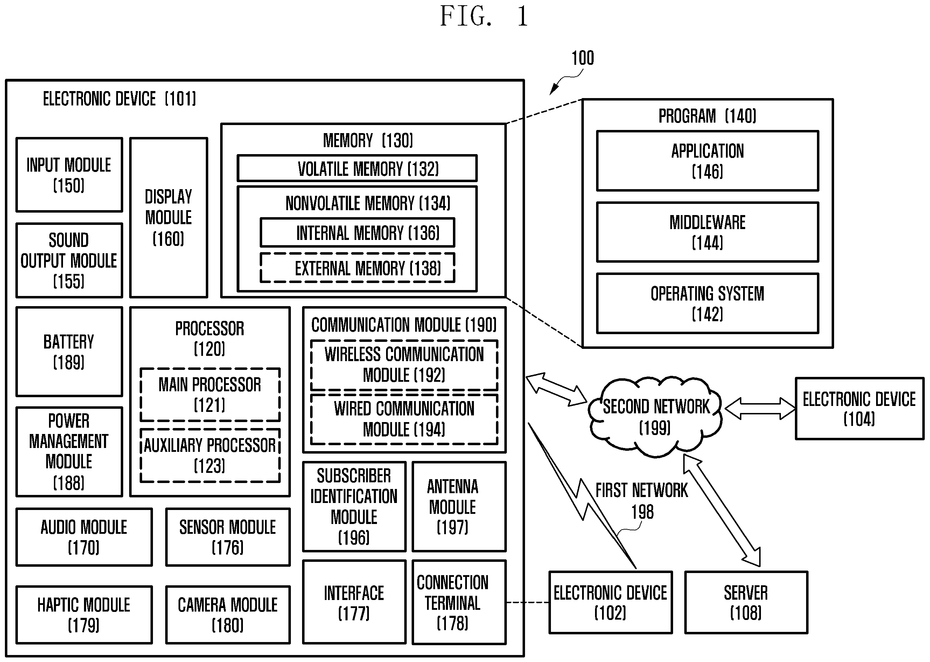

FIG. 1 is a block diagram illustrating an electronic device 101 in a network environment 100 according to various embodiments.

With reference to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 may include the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, For example, software (e.g., the program 140) and input data or output data for a command related thererto. The memory 130 may include the volatile memory 132 or the non-volatile memory 134.

The program 140 may be stored in the memory 130 as software, and may include, For example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, For example, a microphone, a mouse, a keyboard, a key (e.g., a button), or a digital pen (e.g., a stylus pen).

The sound output module 155 may output sound signals to the outside of the electronic device 101. The sound output module 155 may include, For example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, For example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, For example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, For example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, For example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, For example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, For example, a power management integrated circuit (PMIC).

The battery 189 may supply power to at least one component of the electronic device 101. According to an embodiment, the battery 189 may include, For example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, For example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI).

According to an embodiment, commands or data may be transmitted or received between the electronic device 101 and the external electronic device 104 via the server 108 coupled with the second network 199. Each of the electronic device 102 or 104 may be a device of a same type as, or a different type, from the electronic device 101. According to an embodiment, all or some of operations to be executed at the electronic device 101 may be executed at one or more of the external electronic device 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The electronic device 101 may provide the outcome, with or without further processing of the outcome, as at least part of a reply to the request. To that end, a cloud computing, distributed computing, mobile edge computing (MEC), or client-server computing technology may be used, For example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) on the basis of 5G communication technology or loT-related technology.

The electronic device according to various embodiments may be one of various types of electronic devices. The electronic devices may include, for example, a portable communication device (e.g., smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., the first element) is referred to, with or without the term "operatively" or "communicatively", as "coupled with", "coupled to", "connected with", or "connected to" another element (e.g., the second element), it means that the element may be coupled with the other element directly (e.g., wiredly), wirelessly, or via the third element.

As used in connection with various embodiments of the disclosure, the term "module" may include a unit implemented in hardware, software, or firmware, and may interchangeably be used with other terms, For example, "logic", logic block", "part", or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively, or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program or another component may be carried out sequentially, in parallel, repeatedly, or heuristically, or one or more of the operations may be executed in a different order or omitted, or one or more other operations may be added.

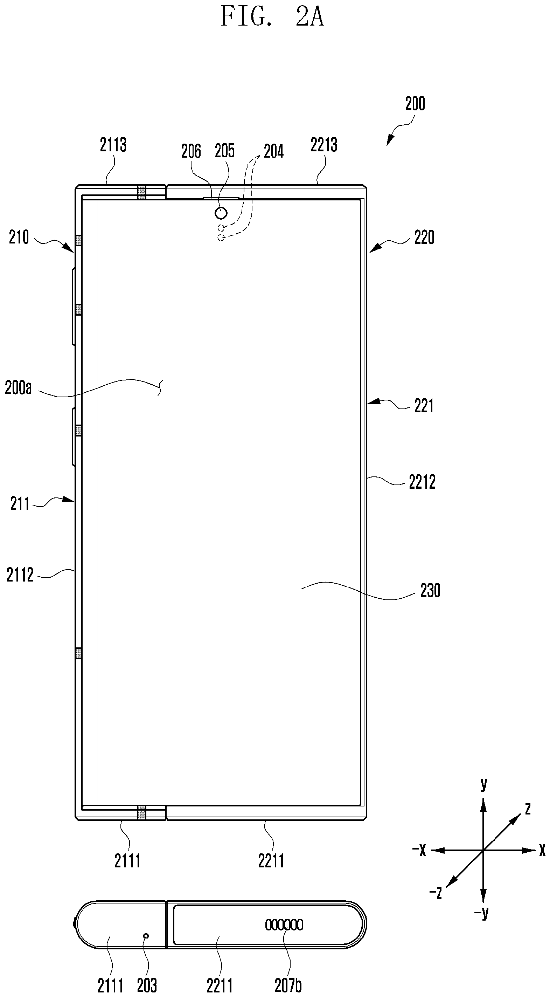

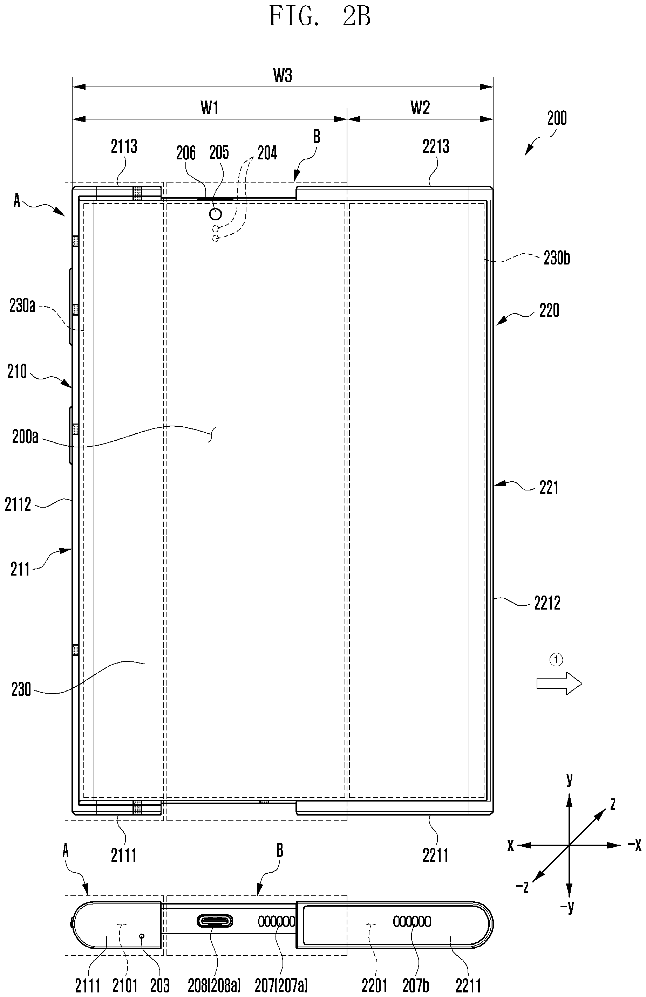

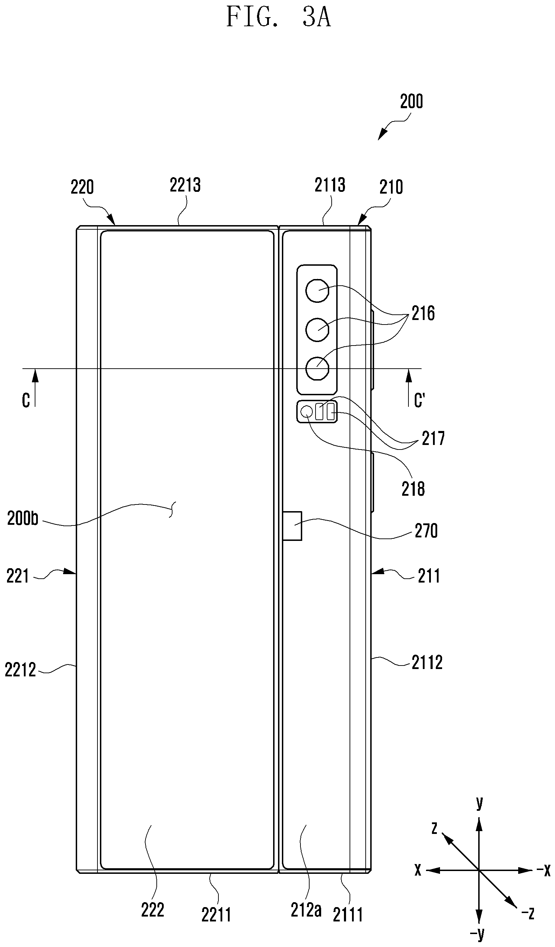

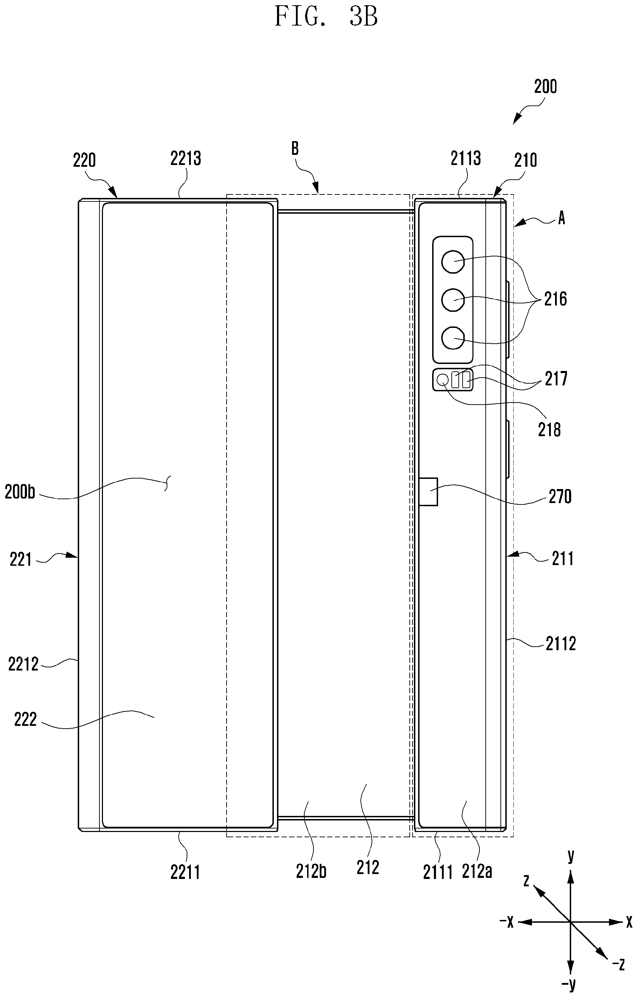

FIGS. 2a and 2b are diagrams illustrating front and side views of an electronic device in a slide-in state and a slide-out state according to various embodiments. FIGS. 3a and 3b are diagrams illustrating a rear surface of an electronic device in a slide-in state and a slide-out state according to various embodiments.

According to various embodiments, the electronic device 200 of FIGS. 2a to 3b may include the electronic device 101 of FIG. 1.

With reference to FIGS. 2a to 3b, the electronic device 200 includes a first housing 210 (e.g., a base housing); a second housing 220 (e.g., a slide housing) movably coupled in a first direction (direction ①) designated from the first housing 210 (e.g., the x-axis direction) and in a designated reciprocating distance; and a flexible display 230 (e.g., an expandable display) disposed to be supported through at least a portion of the first housing 210 and the second housing 220.

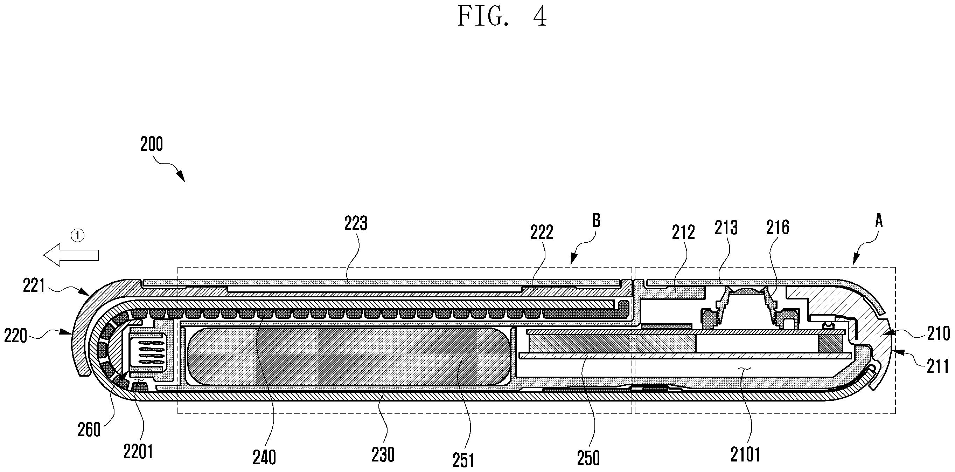

According to an embodiment, the electronic device 200, in a slide-out state, may form at least partially the same plane as at least a portion of the first housing 210; and, in a slide-in state, may include a sliding plate (e.g., the sliding plate 240 of FIG. 4) that is at least partially accommodated in the inner space (e.g., the second space 2201 of FIG. 4) of the second housing 220. The sliding plate 240 may include, for example, one of an articulated support plate, an articulated hinge module, and a bendable member or a bendable support member.

According to an embodiment, at least a portion of the flexible display 230, in a slide-in state, may be disposed to be invisible from the outside by being supported by a sliding plate (e.g., the sliding plate 240 of FIG. 4) and by being accommodated in the inner space (e.g., the second space 2201 of FIG. 4) of the second housing 220. At least a portion of the flexible display 230, in a slide-out state, may be disposed to be visible from the outside by being supported by a sliding plate (e.g., the sliding plate 240 of FIG. 4) that forms at least partially the same plane as the first housing 210.

According to various embodiments, the electronic device 200 may include a front surface 200a (e.g., a first surface), a rear surface 200b (e.g., a second surface) facing the opposite direction from the front surface 200a, and a side surface (not shown) surrounding the space between the front surface 200a and the rear surface 200b. The first housing 210 of the electronic device 200 may include a first lateral member 211. The second housing 220 may include a second lateral member 221.

According to an embodiment, the first lateral member 211 may include a first side surface 2111 having a first length along a first direction (e.g., the x-axis direction); a second side surface 2112 along a direction substantially perpendicular to the first side surface 2111 and extending to have a second length longer than the first length; and a third side surface 2113 extending substantially parallel to the first side surface 2111 from the second side surface 2112 and having a first length. The first lateral member 211 may be at least partially formed of a conductive material (e.g., metal). At least a portion of the first lateral member 211 may include a first support member 212 extending to at least a portion of the inner space (e.g., the first space 2101 of FIG. 4) of the first housing 210.

According to various embodiments, the second lateral member 221 may include a fourth side surface 2211 that at least partially corresponds to the first side surface 2111 and that has a third length; a fifth side surface 2212 that extends in a direction substantially parallel to the second side surface from the fourth side surface 2211 and that has a fourth length longer than the third length; and a sixth side surface 2213 that extends from the fifth side surface 2212 to correspond to the third side surface 2113 and that has the third length. The second lateral member 221 may be at least partially formed of a conductive material (e.g., metal). At least a portion of the second lateral member 221 may include a second support member 222 extending to at least a portion of the inner space of the second housing 220 (e.g., the second space 2201 of FIG. 4).

According to an embodiment, the first side surface 2111 and the fourth side surface 2211 and the third side surface 2113 and the sixth side surface 2213 may be slidably coupled to each other. In the case that the electronic device 200 is in a slide-in state, at least a portion of the first side surface 2111 may overlap with at least a portion of the fourth side surface 2211 so that the remaining portion of the first side surface 2111 can be visible from the outside. In the case that the electronic device 200 is in a slide-in state, at least a portion of the third side surface 2113 may overlap with at least a portion of the sixth side surface 2213 so that the remaining portion of the third side surface 2113 can be visible from the outside.

According to an embodiment, in the case that the electronic device 200 is in a slide-in state, at least a portion of the first support member 212 of the first lateral member 211 is attached to the second support member 222 of the second lateral member 221, and the remaining portion of the first support member 212 may be visible from the outside. The first support member 212 may include a non-overlapping portion 212a that does not overlap with the second support member 222 and an overlapping portion 212b that overlaps with the second support member 222 in the slide-in state. In some embodiments, non-overlapping portion 212a and overlapping portion 212b may be integrally formed. In some embodiments, the non-overlapping portion 212a and the overlapping portion 212b may be provided separately and structurally combined.

According to various embodiments, the first housing 210 may include a first subspace A corresponding to the non-overlapping portion 212a and a second subspace B corresponding to the overlapping portion 212b in the first space (e.g., the first space 2101 of FIG. 4). The first subspace A and the second subspace B may be arranged in such a manner that they are connected to each other or separated from each other. The first subspace A may be formed to have a larger space volume than the second subspace B.

According to an embodiment, the electronic device 200 may include a plurality of electronic components (e.g., a camera module 216. a sensor module 217, a flash 218, a printed circuit board (e.g., the printed circuit board 250 of FIG. 4), or a battery (e.g., the battery 251 of FIG. 4)) disposed in a first space A (e.g., the first space 2101 of FIG. 4) of the first housing 210.

According to an embodiment, the first subspace A, for example, may be used as an area disposing electronic components (e.g., the camera module 216, the sensor module 217, or the flash 218) that require a relatively large mounting space (or require a relatively large mounting thickness) or must operate by avoiding an overlapping structure. The second subspace B, for example, may be used as an area disposing electronic components (e.g., the printed circuit board 250 of FIG. 4 or the battery (e.g., the battery 251 of FIG. 4)) that require a relatively small mounting space (or require a relatively small mounting thickness) or can operate regardless of an overlapping structure.

According to various embodiments, the areas of the front surface 200a and the rear surface 200b of the electronic device 200 may vary depending on the slide-in and slide-out states. In some embodiments, the electronic device 200, in the rear surface 200b, may include a first rear surface cover (e.g., the first rear surface cover 213 of FIG. 4) disposed on at least a portion of the first housing 210 and a second rear surface cover 200b (e.g., the second rear cover 223 of FIG. 4) disposed on at least a portion of the housing 220. The first rear surface cover 213 and/or the second rear surface cover 223 may be integrally formed with each of the lateral members 211 and 221. The first rear surface cover 213 and/or the second rear surface cover 223 may be separately disposed on the first support member 212 and the second support member 222.

According to an embodiment, the first rear surface cover 213 and/or the second rear surface cover 223 may be formed of polymer, coated or tinted glass, ceramic, metal (e.g., aluminum, stainless steel (STS), or magnesium), or a combination of at least two of the foregoing. In some embodiments, the first rear surface cover 213 and/or the second rear surface cover 223 may extend to at least a portion of each of the lateral members 211 and 221. In some embodiments, at least a portion of the first support member 212 may be replaced with the first rear surface cover 213, and at least a portion of the second support member 222 may be replaced with the second rear surface cover 223.

According to various embodiments, the electronic device 200 may include a flexible display 230 disposed to be supported by at least a portion of the first housing 210 and the second housing 220. The flexible display 230 may include a first portion 230a (e.g., a flat portion) visible from the outside both in the slide-in state and the slide-out state, and a second portion 230b (e.g., a bendable portion) extending from the first portion 230a and slid into the inner space (e.g., the first space 2201 of FIG. 4) of the second housing 220 to be invisible from the outside in the slide-in state. The first part 230a may be disposed to be supported by the first housing 210, and the second portion 230b may be disposed to receive support from at least a portion of a sliding plate (e.g., the sliding plate 240 of FIG. 4).

According to an embodiment, the flexible display 230 may be disposed so that it can extend from the first potion 230a while being supported by the sliding plate (e.g., the sliding plate 240 of FIG. 4), form substantially the same plane as the first portion 230a, and be visible from the outside in a state that the second housing 220 slides out along the designated first direction (direction ①) (e.g., the x-axis direction). The second portion 230b of the flexible display 230 may be disposed so that it can be slid into the inner space (e.g., the second space 2201 of FIG. 4) of the second housing 220 and can be invisible from the outside in a state that the second housing 220 is slid in along the designated second direction (e.g., the direction opposite to the direction ①). In the electronic device 200, the display area of the flexible display 230 may vary as the second housing 220 moves in a sliding manner along a designated direction from the first housing 210.

According to various embodiments, the first housing 210 and the second housing 220 are operated in a sliding manner so that their overall width can vary relative to the width of each. The electronic device 200 may be configured to have a first width W1 from the second side surface 2112 to the fifth side surface 2212 in the slide-in state. In the slide-out state, the electronic device 200 may be configured to have a third width W3 greater than the first width W1 by a portion of the sliding plate (e.g., the sliding plate 240 of FIG. 4), slid into the inner space (e.g., the second space 2201 of FIG. 4), being moved to have an additional second width W2. For example, the flexible display 230 may have a display area substantially equal to the first width W1 in a slide-in state and may have an expanded display area substantially equal to a third width W3 in a slide-out state.

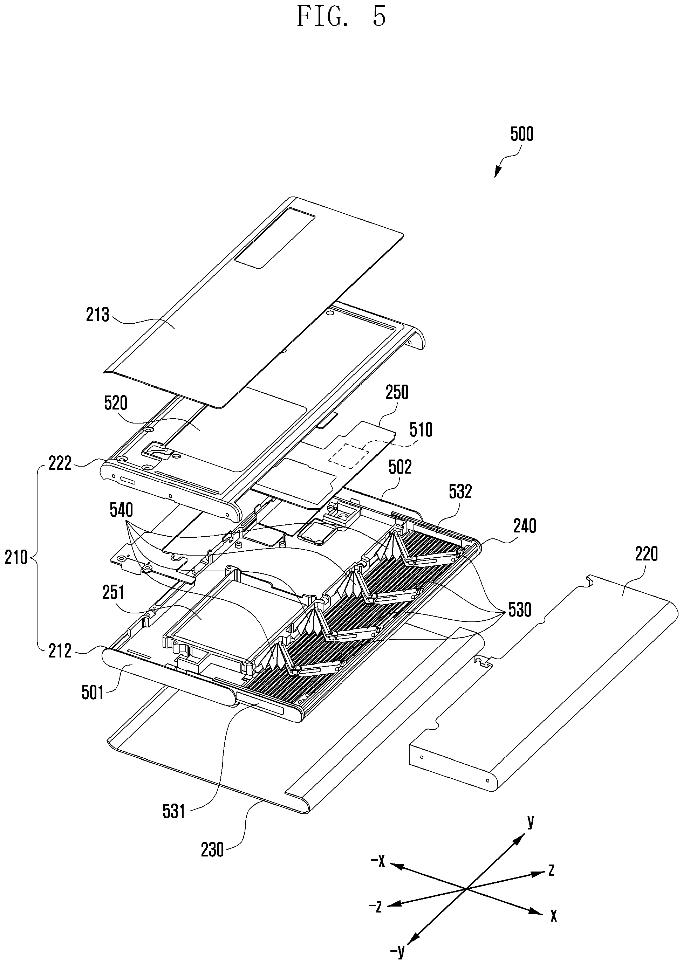

According to various embodiments, the slide-out operation of the electronic device 200 may be performed through manipulation by a user. For example, the second housing 220 may be slid out in a designated first direction (e.g., direction ①) by manipulating a locker 270 exposed through the rear surface 200b of the electronic device. In this case, the locker 270 disposed in the first housing 210 may interrupt the second housing 220 to keep the second housing 220, which is pressed in the slide-out direction (e.g., the direction ①) through the sliding driving unit (e.g., the sliding driving unit 260 of FIG. 4 or the sliding driving unit 530 of FIG. 5) to be described later, to be in a slide-in state. In some embodiments, the electronic device 200 may be driven in a slide-out state through manipulation by a user, the user pressing the outer surface of the flexible display 230 in a designated first direction (direction ①) in the slide-in state. In some embodiments, the second housing 220 may be automatically operated through a driving mechanism (e.g., a driving motor, a deceleration module, and/or a gear assembly) disposed in an inner space (e.g., the first space 2101 of FIG. 4) of the first housing 210 and in an inner space (e.g., the second space 2201 of FIG. 4) of the second housing 220.

According to an embodiment, the electronic device 200 may be configured to control the operation of the second housing 220 through a driving mechanism in the case that it detects an event for driving the slide-in state and/or the slide-out state of the electronic device 200 through a processor (e.g., the processor 120 of FIG. 1). The processor (e.g., the processor 120 of FIG. 1) of the electronic device 200 may control the flexible display to display objects in various ways and execute an application program in response to the changed display area of the flexible display 230 in accordance with a slide-in state, a slide-out state, or an intermediate state (e.g., including free stop state).

According to various embodiments, the electronic device 200 may include at least one of an input module 203 (e.g., the input module 150 of FIG. 1) disposed in a first space A (e.g., the first space 2101 of FIG. 4) of the first housing 210, sound output modules 206 and 207 (e.g., the audio output module 155 of FIG. 1), sensor modules 204 and 217 (e.g., the sensor module 176 of FIG. 1), camera modules 205 and 216 (e.g., the camera module 180 of FIG. 1), a connector port 208, a key input device (not shown), or an indicator (not shown). The electronic device 200 may be configured so that at least one of the above-described components can be omitted or other components can be included additionally.

According to various embodiments, the input module 203 (e.g., the input module 150 of FIG. 1) may include a microphone. The input module 203 may include a plurality of microphones disposed to detect the direction of sound. The sound output modules 206 and 207 (e.g., the sound output module 155 of FIG. 1) may include a speaker. The sound output modules 206 and 207 may include a receiver 206 for a call and an external speaker 207. The external speaker 207 may face the outside through the first speaker hole 207a disposed in the first housing 210 in the case that electronic device 200 is in a slide-out state. The external speaker 207 may face the outside through the first speaker hole 207a and the second speaker hole 207b formed in the second housing 220 corresponding to the first speaker hole 207a in the case that the electronic device 200 is in a slide-in state.

According to various embodiments, the sensor modules 204 and 217 (e.g., the sensor module 176 of FIG. 1) may generate electrical signals and data values corresponding to an internal operating state of the electronic device 200 or an external environmental state. The sensor modules 204 and 217 may include, for example, the first sensor module 204 (e.g., a proximity sensor or an illuminance sensor) disposed on the front surface 200a of the electronic device 200 and/or the second sensor module 217 (e.g., a heart rate monitoring (HRM sensor) disposed on the rear surface 200b of the electronic device 200. The first sensor module 204 may be disposed below the flexible display 230 on the front surface 200a of the electronic device 200. The first sensor module 204 and/or the second sensor module 217 may include at least one of a proximity sensor, an illuminance sensor, a time of flight (TOF) sensor, an ultrasonic sensor, a fingerprint recognition sensor, a gesture sensor, a gyro sensor, an air pressure sensor, a magnetic sensor, an acceleration sensor, a grip sensor, a color sensor, an infrared (IR) sensor, a biosensor, a temperature sensor, or a humidity sensor.

According to various embodiments, the camera modules 205 and 216 (e.g., the camera module 180 of FIG. 1) may include a first camera module 205 disposed on the front side 200a of the electronic device 200 and a second camera module 216 disposed on the rear side 200b of the electronic device 200. The electronic device 200 may include a flash 218 positioned near the second camera module 216. The camera modules 205 and 216 may include one or a plurality of lenses, an image sensor, and/or an image signal processor. The first camera module 205 may be disposed under the flexible display 230 and may be configured to photograph a subject through a part of an active area of the flexible display 230. Flash 218 may include, for example, a light emitting diode or a xenon lamp.

According to various embodiments, the first camera module 205 among the camera modules 205 and 216 and part of the sensor module 204 among the sensor modules 204 and 217 may be disposed to detect the external environment through the flexible display 230. For example, the first camera module 205 or part of the sensor modules 204 may face the external environment through an opening or a transmission area punched in the flexible display 230 in the internal space of the electronic device 200. An area facing the first camera module 205 of the flexible display 230 may be formed as a transmission area having a designated transmittance as a part of an area displaying content.

According to various embodiments, the connector port 208 may face the outside through the connector port hole 208a formed in the first housing 210 in the case that the electronic device 200 is in a slide-out status. The connector port 208 may be covered not to be visible through the second housing 220 from the outside in the case that the electronic device 200 is in a slide-in status. The connector port 208 may face the outside through another connector port hole formed in the second housing 220 to correspond to the connector port hole 208a even in the case that the electronic device 200 is in a slide-in state. The sound output module 206 may include a speaker (e.g., a piezo speaker) operating while excluding a separate speaker hole.

FIG. 4 is a diagram schematically illustrating a cross section of the C-C' line of the electronic device disclosed in FIG. 3a.

With reference to FIG. 4, an electronic device 200 according to various embodiments of the present disclosure includes a first housing 210 having a first space 2101; a second housing 220 having a second space 2201; a sliding plate 240 connected to the first housing 210 and at least partially accommodated in the second space 2201 in a slide-in state; a flexible display 230 disposed to be supported by at least a portion of the sliding plate 240 and at least a portion of the first housing 210; and a sliding driving unit 260 (e.g., the sliding driving unit 530 of FIG. 5) disposed in the first housing 210 and pressing the second housing 220 in the slide-out direction (e.g., direction ①).

According to an embodiment, the electronic device 200 may include a plurality of electronic components. The plurality of electronic components may be disposed in the first space 2101 of the first housing 210. The first space 2101 may include a first subspace A having a first space volume and a second subspace B connected to the first subspace A and having a second space volume smaller than the first space volume. The second subspace B may include a space corresponding to an area where a part of the first housing 210 overlaps with a part of the second housing 220 in the case that the electronic device 200 is in a slide-in state.

According to various embodiments, first electronic components, among a plurality of electronic components, that require a relatively large mounting space, a relatively large mounting thickness of the electronic device 200, or are being operated to avoid an overlapping structure of the first housing 210 and the second housing 220, may be disposed in the first subspace A. For example, the first electronic components may include a camera module 216, a sensor module (e.g., the sensor module 217 of FIG. 3b), or a flash (e.g., the flash 218 of FIG. 3b). In this case, at least a portion of the first electronic components may be disposed to face the external environment through the first support member 212 and/or the first rear cover 213. Second electronic components, among a plurality of electronic components, that require a relatively small mounting space, a relatively small mounting thickness of the electronic device 200, or are being operated irrespective of the overlapping structure of the first housing 210 and the second housing 220, may be disposed in the second subspace B. For example, the second electronic components may include a printed circuit board 250 or a battery 251. In some embodiments, a portion of the plurality of electronic components (e.g., the printed circuit board 250 or the FPCB), in the case that the first subspace A and the second subspace B are connected, may be disposed in the first subspace A and the second subspace B together.

FIG. 5 is an exploded perspective view schematically illustrating an electronic device including a thermal diffusion member according to various embodiments.

According to various embodiments, the electronic device 500 of FIG. 5 may include the electronic device 101 of FIG. 1 and/or the electronic device 200 of FIGS. 2a to 4.

In the description of FIG. 5, the same reference numerals are assigned to the same configuration as the embodiments disclosed in the electronic device 200 of FIGS. 2a to 4 described above, and redundant descriptions of functions may be omitted.

With reference to FIG. 5, an electronic device 500 according to various embodiments of the present disclosure includes a first housing 210, a second housing 220, a flexible display 230, a sliding plate 240, a printed circuit board 250, a heat-generating component 510, a sliding driving unit 530, and a thermal diffusion member 540. The electronic device 500 according to various embodiments of the present disclosure may include a wireless power receiving circuit 520.

According to an embodiment, the first housing 210 includes a first support member 212 (e.g., a first bracket) and a second support member 222 (e.g., a second bracket). The first support member 212 and the second support member 222 may be coupled to each other. A first space (e.g., the first space 2101 of FIG. 4) may be included between the first support member 212 and the second support member 222. The first support member 212 of the first housing 210 may support at least a portion of the flexible display 230.

According to various embodiments, the first support member 212 and the second support member 222 may contribute to durability or rigidity of the electronic device 500 as a frame structure capable of withstanding a load. The first support member 212 and the second support member 222 may include a non-metal material (e.g., a polymer) and/or a metal material.

According to various embodiments, the first support member 212 of the first housing 210 may include a first side surface 501 covering one side surface (e.g., -y axis direction) and a second side surface 502 covering the other side surface in the opposition direction (e.g., the y-axis direction) to the first side surface 501. The first side surface 501 and the second side surface 502 may be at least partially made of a conductive material (e.g., metal). The first side surface 501 and/or the second side surface 502 may operate as an antenna by being electrically connected to the wireless communication module 192 (e.g., the wireless communication module 192 of FIG. 1).

According to various embodiments, a sliding structure (not shown) for sliding of the sliding plate 240 may be provided in the inside of the first side surface 501 of the first support member 212 and the second side surface 502 opposite to the first side surface 501. For example, the sliding structure may include a guide rail and a slide or roller that is guided and moved by the guide rail. The sliding structure may be seated on the first guide slit 531 and the second guide slit 532 formed on one side surface and the other side surface of the sliding plate 240, and it may be slid in a first direction (e.g., the x-axis direction) and a second direction (e.g., the -x-axis direction). The first guide slit 531 and the second guide slit 532 may include grooves or recesses corresponding to the moving path of the sliding structure. In another embodiment, the sliding structure may be provided inside one side surface and the other side surface of the second housing 220.

According to various embodiments, a rear surface cover 213 (e.g., the first rear surface cover 213 of FIG. 4) may be disposed in one side (e.g., the y-axis direction) of the second support member 222 of the first housing 210. The rear surface cover 213 may form at least a part of the rear surface 200b (e.g., the rear surface 200b of FIG. 3a) of the electronic device 500. The rear surface cover 213 may be substantially opaque. For example, the rear surface cover 213 may be formed of coated or tinted glass, ceramic, polymer, metal (e.g., aluminum, stainless steel (STS), or magnesium), or a combination of at least two of the foregoing.

According to an embodiment, the second housing 220 is slidably coupled to the first housing 210. The second housing 220 may include a second space (e.g., the second space 2201 of FIG. 4). The second housing 220 may accommodate the sliding plate 240 and the sliding driving unit 530 in the second space 2201.

According to an embodiment, the flexible display 230 is supported by at least a portion of the first support member 212 and the sliding plate 240 of the first housing 210. The display area of the flexible display 230 may vary in accordance with the sliding motion of the sliding plate 240.

According to various embodiments, the flexible display 230 may be defined as a slide-out display or an expandable display. The flexible display 230 may include a flexible substrate (e.g., a plastic substrate) formed of a polymer material including polyimide (PI) or polyester (PE). The flexible display 230 may be coupled to the first support member 212 and the sliding plate 240 using an adhesive member.

According to an embodiment, the sliding plate 240 may be slidably disposed at least partially in the second space 2201 of the second housing 220. A first end (e.g., one end) of the sliding plate 240 is coupled to the first support member 212 of the first housing 210 and a second end (e.g., the other end) of the sliding plate 240 is disposed to slide at least partially in the second space 2201 of the second housing 220. At least a portion of the sliding plate 240 supports the flexible display 230 together with the first support member 212 of the first housing 210.

According to various embodiments, the sliding plate 240 is at least partially accommodated in the second space 2201 of the second housing 220 in a slide-in state. The sliding plate 240 may be at least partially slid out of the second space 2201 to form substantially the same plane as the first housing 210 in a slide-out state. The sliding plate 240 may include, for example, one of an articulated support plate, an articulated hinge module, and a bendable member or a bendable support member.

According to an embodiment, the printed circuit board 250 is disposed between the first support member 212 and the second support member 222 of the first housing 210. The printed circuit board 250 may include a processor (e.g., the processor 120 of FIG. 1), a memory (e.g., the memory 130 of FIG. 1), and/or an interface (e.g., the interface 177 of FIG. 1).

According to various embodiments, the processor may include, for example, at least one of a central processing unit, a graphic processing unit, an image signal processor, and a sensor hub processor. The memory may include, for example, volatile memory or non-volatile memory. The interface may include, for example, a high definition multimedia interface (HDMI), a universal serial bus (USB) interface, an SD card interface, and/or an audio interface. The interface may, for example, electrically or physically connect the electronic device 500 to an external electronic device (e.g., the electronic devices 102 and 104 or the server 108 of FIG. 1), and it may include a USB connector, an SD card/MMC connector, or an audio connector.

According to various embodiments, the electronic device 500 may include various elements disposed on or electrically connected to the printed circuit board 250. For example, the electronic device 500 may include a battery 251 disposed between the first support member 212 and the second support member 222. The battery 251 may include, for example, a non-rechargeable primary battery, a rechargeable secondary battery, or a fuel cell as a device for supplying power to at least one component of the electronic device 500.

According to an embodiment, at least one heat-generating component 510 is disposed on one side (e.g., the -y-axis direction) of the printed circuit board 250. At least one heat-generating component 510 may include, for example, an application processor (AP), a communication processor (CP), a power amplifier, and/or an inductor.

According to an embodiment, the wireless power receiving circuit 520 may be disposed on one surface (e.g., the y-axis direction) of the second support member 222. The wireless power receiving circuit 520 may be disposed between the second support member 222 of the first housing 210 and the rear cover 213. The wireless power receiving circuit 520 may wirelessly receive power necessary for charging the electronic device 500 and supply the received power to the battery 251.

According to various embodiments, an antenna (not shown) may be disposed between the second support member 222 of the first housing 210 and the rear cover 213. For example, the antenna may include a near field communication (NFC) antenna, a wireless charging antenna, and/or a magnetic secure transmission (MST) antenna. The antenna may perform short-range communication with an external electronic device or wirelessly transmit/receive power required for charging.

According to an embodiment, the sliding driving unit 530 (e.g., a support roller) is disposed from the first support member 212 of the first housing 210 toward the second space 2201. The sliding driving unit 530 is disposed on an inner surface (e.g., the y-axis direction) of the sliding plate 240. A first end (e.g., one end) of the sliding driving unit 530 is coupled to the first support member 212 of the first housing 210 and a second end (e.g., the other end) of the sliding driving unit 530 is coupled to one side surface of the sliding plate 240. The sliding driving unit 530 performs a folding or unfolding operation so that the sliding plate 240 can slide. The sliding driving unit 530 may support at least a portion of the sliding plate 240. At least one sliding driving unit 530 may be provided.

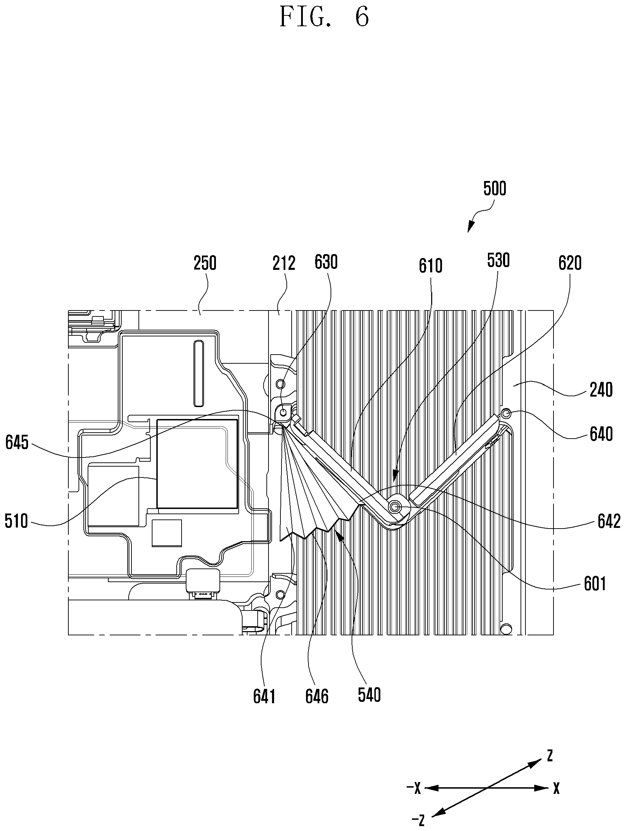

According to an embodiment, a first side surface (e.g., the first side surface 641 of FIG. 6) of the thermal diffusion member 540 is coupled to the first support member 212 of the first housing 210 and a second side surface (e.g., the second side surface 642 of FIG. 6) of the thermal diffusion member is coupled to at least a portion of the sliding driving unit 530. The thermal diffusion member 540 is folded or unfolded in conjunction with the sliding driving unit 530. In the case that the sliding driving unit 530 performs a sliding-out operation, the thermal diffusion member 540 diffuses and dissipates the heat generated from the heat-generating component 510 to the outside of the electronic device 500 by being unfolded accordingly. In the case that the sliding driving unit 530 performs a sliding-in operation, the thermal diffusion member 540 is folded accordingly. The thermal diffusion member 540 may include a graphite sheet. The thermal diffusion member 540 may include a copper (CU) sheet or an aluminum (AL) sheet.

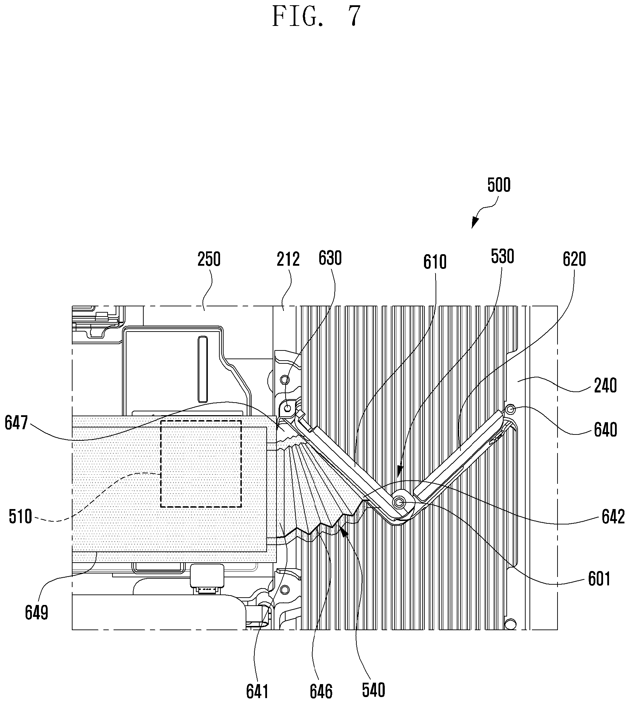

FIGS. 6 and 7 are views each illustrating respective portions of an electronic device including a sliding driving unit and a thermal diffusion member according to various embodiments.

In the description of FIGS. 6 and 7, the same reference numerals are assigned to the same configuration as the embodiments disclosed in the electronic device 200 of FIGS. 2a to 4 and the electronic device 500 of FIG. 5 described above, and redundant descriptions of the functions may be omitted.

With reference to FIG. 6, an electronic device 500 according to various embodiments of the present disclosure includes a sliding driving unit 530 and a thermal diffusion member 540.

According to an embodiment, a first end (e.g., one end) of the sliding driving unit 530 is coupled to the first support member 212 of the first housing 210, and a second end (e.g., the other end) of the sliding driving unit 530 is coupled to one side surface of the sliding plate 240.

According to an embodiment, the sliding driving unit 530 may include a shaft 601, a first link 610, a second link 620, a first joint 630, and a second joint 640.

According to various embodiments, the shaft 601 may rotatably couple the first link 610 and the second link 620. A first end of the first link 610 may be coupled to the first support member 212 using a first joint 630. A second end of the first link 610 may be rotatably coupled to the shaft 601. A first end of the second link 620 may be rotatably coupled to the shaft 601. A second end of the second link 620 may be coupled to one side surface of the sliding plate 240 using a second joint 640. The lengths of the first link 610 and the second link 620 may be substantially the same. In other embodiments, the lengths of the first link 610 and the second link 620 may be different. The thermal diffusion member 540 is folded or unfolded in conjunction with the sliding driving unit 530. The first link 610 and the second link 620 of the sliding driving unit 530 may include at least one of gold, silver, or copper plating and may be configured to increase thermal conductivity.

According to various embodiments, the sliding driving unit 530 may be unfolded in the first direction (e.g., the x-axis direction) as the first link 610 and the second link 620 perform a sliding-out operation with respect to the shaft 601. In this case, the sliding plate 240 may be slid-out in a first direction (e.g., the x-axis direction).

According to various embodiments, the sliding driving unit 530 may be folded in the second direction (e.g., -x axis direction) as the first link 610 and the second link 620 perform a sliding-in operation with respect to the shaft 601. In this case, the sliding plate 240 may be slid-in in a second direction (e.g., the -x-axis direction).

According to an embodiment, the thermal diffusion member 540 is disposed between the first support member 212 and the sliding driving unit 530. The thermal diffusion member 540 may be disposed between the first support member 212 and the first link 610.

According to various embodiments, the thermal diffusion member 540 may have a first side surface 641 coupled to the first support member 212 and a second side surface 642 coupled to the first link 610. The thermal diffusion member 540 may be configured so that a first end 645 can be fixedly coupled to the first joint 630 and a second end 646 can perform a folding or unfolding operation. The thermal diffusion member 540 may have a fan shape in which the first end 645 is gathered and the second end 646 is spread out. For example, the second end 646 of the thermal diffusion member 540 may have a zigzag shape. The thermal diffusion member 540 may include a foldable graphite sheet.

According to various embodiments, as the first link 610 and the second link 620 of the sliding driving unit 530 perform a sliding-out operation, the thermal diffusion member 540 may be unfolded in the first direction (e.g., the z-axis direction). The thermal diffusion member 540 may be folded in a second direction (e.g., the -z-axis direction) as the first link 610 and the second link 620 of the sliding driving unit 530 perform a sliding-in operation.

According to various embodiments, the thermal diffusion member 540 may be disposed adjacent to the heat-generating component 510 mounted on one surface of the printed circuit board 250. The thermal diffusion member 540 is unfolded as the sliding driving unit 530 performs a sliding-out operation, and it may diffuse and/or dissipate heat generated from the heat-generating component 510 to the outside of the electronic device 500.

With reference to FIG. 7, the thermal diffusion member 540 may include an opening 647 formed by removing a portion of the first end 645. Since the first end of the thermal diffusion member 540 (e.g., 645 in FIG. 6) of the opening 647 is not coupled to the first joint 630, rotation of the first link 610 may be smoothly performed.

According to various embodiments, the thermal diffusion member 540 may include an extension or expansion part 649. The expansion part 649 may be a part extending integrally with the thermal diffusion member 540 disposed between the first support member 212 and the first link 610. The extension part 649 may cover at least a portion of the printed circuit board 250. The expansion part 649 may cover the heat-generating component 510. The heat generated from the heat-generating component 510 may be diffused and/or dissipated to the outside of the electronic device 500 through the expansion part 649 and the thermal diffusion member 540 as the sliding driving unit 530 performs a sliding-out operation.

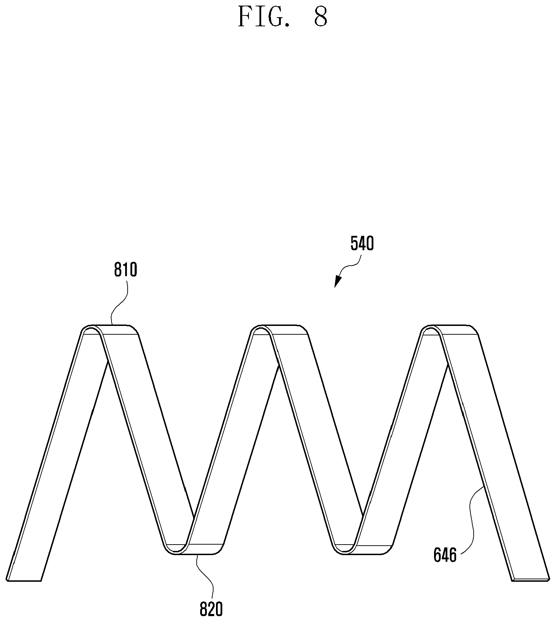

FIG. 8 is a diagram schematically illustrating a configuration of a thermal diffusion member of an electronic device according to various embodiments.

With reference to FIG. 8, the second end 646 of the thermal diffusion member 540 may have a zigzag shape. For example, the second end 646 may include at least one first folding part 810 at an upper part and at least one second folding part 820 at a lower part. Ends of the first folding unit 810 and the second folding unit 820 may have a curved shape. The ends of the first folding unit 810 and the second folding unit 820 may have a triangular shape with angles.

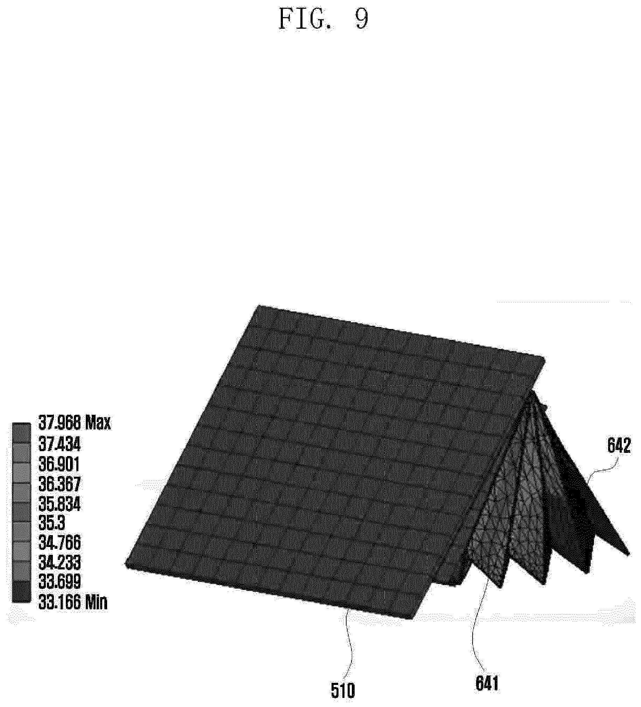

FIG. 9 is a diagram illustrating a temperature change of a thermal diffusion member of an electronic device according to various embodiments of the present disclosure.

With reference to FIG. 9, the thermal diffusion member 540 may be disposed adjacent to the heat-generating component 510. The thermal diffusion member 540 may have a first side surface 641 coupled to the support member 212 and a second side surface 642 coupled to the first link 610 of the sliding driving unit 530.

According to an embodiment, the thermal diffusion member 540 may be unfolded from the first side surface 641 to the second side surface 642 as the sliding driving unit 530 performs a sliding-out operation, and it may diffuse and dissipate the heat generated from the heat-generating component 510 to the outside of the electronic device 500.

With reference to FIG. 9, since the heat generated from the heat-generating component 510 is directly transferred to the first side surface 641 of the thermal diffusion member 540, it may be confirmed that the temperature is measured at about 35°C~36°C. Since the heat generated from the heat-generating component 510 is gradually diffused and dissipated to the second side surface 642 disposed at the distal point extending from the first side surface 641 of the thermal diffusion member 540, it may be confirmed that the temperature is reduced to about 33.1°C~33.6°C.

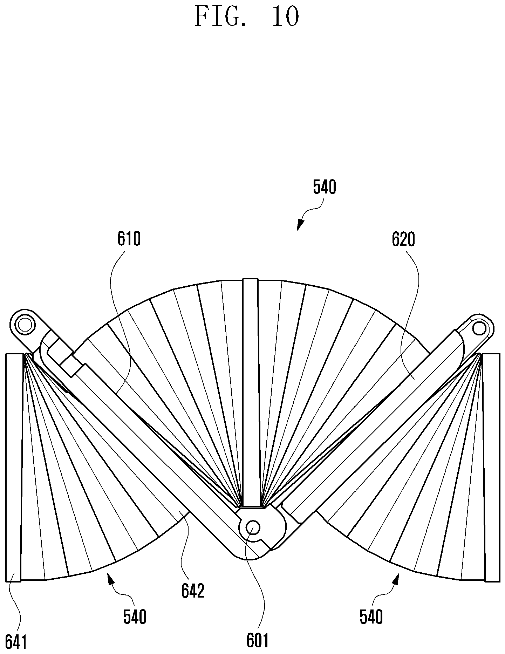

FIG. 10 is a diagram schematically illustrating configurations of a sliding driving unit and a thermal diffusion member of an electronic device according to various embodiments.

With reference to FIG. 10, a thermal diffusion member 540 according to various embodiments of the present disclosure may be coupled to a sliding driving unit 530.

According to an embodiment, the thermal diffusion member 540 may be coupled between the first support member 212 and the first link 610 of the sliding driving unit 530. Additionally, another thermal diffusion member 540 may be coupled between the first link 610 and the second link 620 of the sliding driving unit 530. Additionally, another thermal diffusion member 540 may be coupled between the second link 620 of the sliding driving unit 530 and one side surface of the sliding plate 240.

According to various embodiments, in the case that the thermal diffusion member 540 is disposed between the first support member 212 and the first link 610, between the first link 610 and the second link 620, and/or between the second link 620 and one side surface of the sliding plate 240, the contact area with air may be increased. In this case, if the sliding driving unit 530 performs a sliding-out operation, heat generated from the heat-generating component 510 may be more quickly diffused and/or dissipated to the outside of the electronic device 500.

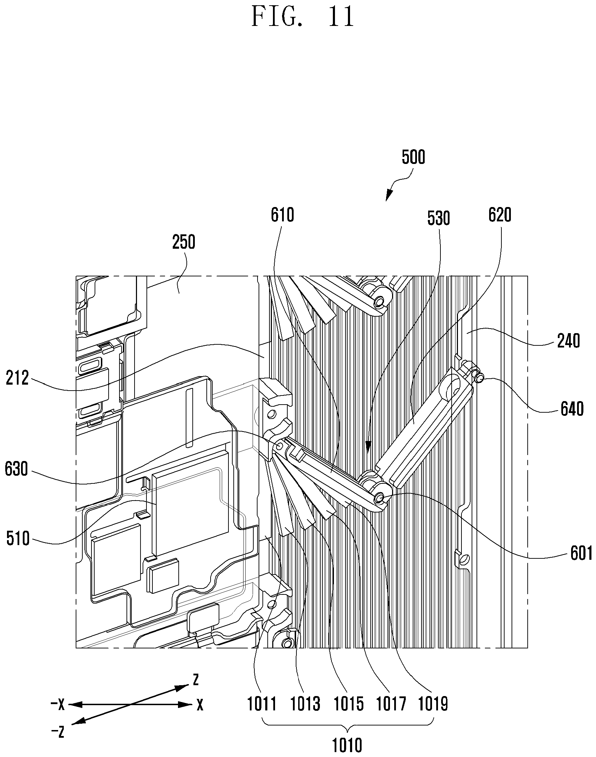

FIG. 11 is a diagram schematically illustrating an example of a thermal diffusion member of an electronic device according to various embodiments.

In the description of FIG. 11, the same reference numerals are assigned to the same configuration as the embodiments disclosed in the electronic device 200 of FIGS. 2a to 4 and the electronic device 500 of FIGS. 5 to 10 described above, and redundant descriptions of the functions may be omitted.

With reference to FIG. 11, an electronic device 500 according to various embodiments of the present disclosure includes a sliding driving unit 530 and a thermal diffusion member 1010.

According to an embodiment, a first end (e.g., one end) of the sliding driving unit 530 is coupled to the first support member 212 of the first housing 210, and a second end (e.g., the other end) of the sliding driving unit 530 is coupled to one side surface of the sliding plate 240.

According to an embodiment, the sliding driving unit 530 may include a shaft 601, a first link 610, a second link 620, a first joint 630, and a second joint 640. The shaft 601 may rotatably couple the first link 610 and the second link 620. A first end of the first link 610 may be coupled to the first support member 212 using a first joint 630. A second end of the first link 610 may be rotatably coupled to the shaft 601. A first end of the second link 620 may be rotatably coupled to the shaft 601. A second end of the second link 620 may be coupled to one side surface of the sliding plate 240 using a second joint 640. The thermal diffusion member 1010 is folded or unfolded in conjunction with the sliding driving unit 530.

According to an embodiment, the thermal diffusion member 1010 is disposed between the first support member 212 and the sliding driving unit 530. The thermal diffusion member 1010 may be disposed between the first support member 212 and the first link 610.

According to an embodiment, the thermal diffusion member 1010 may include at least one thermal diffusion plate 1011, 1013, 1015, 1017, and 1019. For example, the thermal diffusion member 1010 may include a first thermal diffusion plate 1011, a second thermal diffusion plate 1013, a third thermal diffusion plate 1015, a fourth thermal diffusion plate 1017, and/or a fifth thermal diffusion plate 1019. The thermal diffusion member 1010 may be made of a metal material having high thermal conductivity.

According to various embodiments, in the thermal diffusion member 1010, the first thermal diffusion plate 1011 may be coupled to the first support member 212 and the fifth thermal diffusion plate 1019 may be coupled to the first link 610. The first thermal diffusion plate 1011 to the fifth thermal diffusion plate 1019 may be configured so that one end can be fixedly coupled to the first joint 630 and the other end can perform a folding or unfolding operation. For example, the first thermal diffusion plate 1011, the second thermal diffusion plate 1013, the third thermal diffusion plate 1015, the fourth thermal diffusion plate 1017, and the fifth thermal diffusion plate 1019 may be coupled at a distance of, for example, about 0.01 mm to 0.1 mm to facilitate each end to move without overlapping.

According to various embodiments, as the first link 610 and the second link 620 of the sliding driving unit 530 perform a sliding-out operation, a second thermal diffusion plate 1013, a third thermal diffusion plate 1015, and a fourth thermal diffusion plate 1017 of the thermal diffusion member 1010 may be unfolded in a first direction (e.g., the z-axis direction). For example, as the first link 610 and the second link 620 of the sliding driving unit 530 perform a sliding-out operation, the first thermal diffusion plate 1011, the second thermal diffusion plate 1013, the third thermal diffusion plate 1015, the fourth thermal diffusion plate 1017, and the fifth thermal diffusion plate 1019 may be unfolded in a fan shape so that the contact area with air of the thermal diffusion member 1010 can increase. For example, each of the first thermal diffusion plate 1011, the second thermal diffusion plate 1013, the third thermal diffusion plate 1015, the fourth thermal diffusion plate 1017, and the fifth thermal diffusion plate 1019 may be unfolded at substantially equal intervals. In another embodiment, each of the first thermal diffusion plate 1011, the second thermal diffusion plate 1013, the third thermal diffusion plate 1015, the fourth thermal diffusion plate 1017, and the fifth thermal diffusion plate 1019 may be unfolded at different intervals.

According to various embodiments, as the first link 610 and the second link 620 of the sliding driving unit 530 perform a sliding-in operation, the first thermal diffusion plate 1011, the second thermal diffusion plate 1013, the third thermal diffusion plate 1015, the fourth thermal diffusion plate 1017, and the fifth thermal diffusion plate 1019 of the thermal diffusion member 1010 may be folded in a second direction (e.g., the -z-axis direction).

According to various embodiments, the thermal diffusion member 1010 may be disposed adjacent to the heat-generating component 510 mounted on one surface of the printed circuit board 250. The thermal diffusion member 1010 is unfolded as the sliding driving unit 530 performs a sliding-out operation, and it diffuses and/or dissipates heat generated from the heat-generating component 510 to the outside.

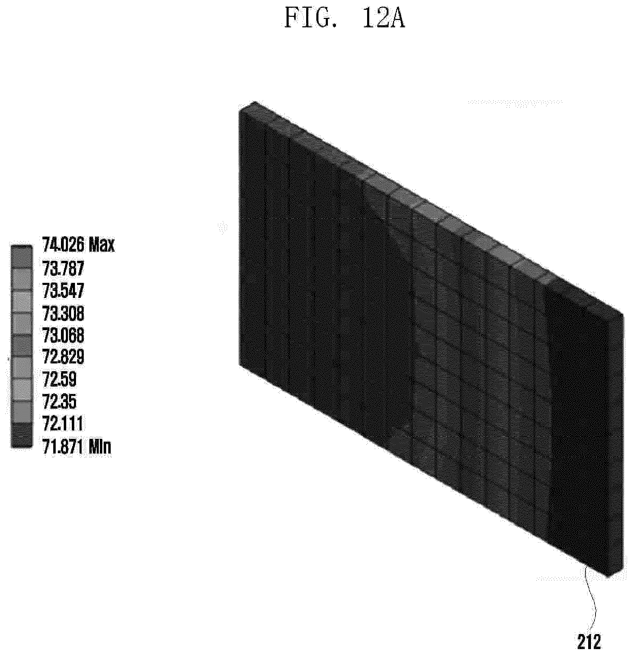

FIGS. 12a to 12f are diagrams illustrating temperature changes in accordance with the number of thermal diffusion members of an electronic device according to various embodiments.

With reference to FIG. 12a, in the case that the thermal diffusion member 1010 (e.g., the first thermal diffusion plate 1011) is not disposed between the first support member 212 of the first housing 210 and the first link 610, it may be confirmed that the temperature of the first support member 212 (or the internal temperature of the electronic device 500) is measured at about 71°C~72°C.

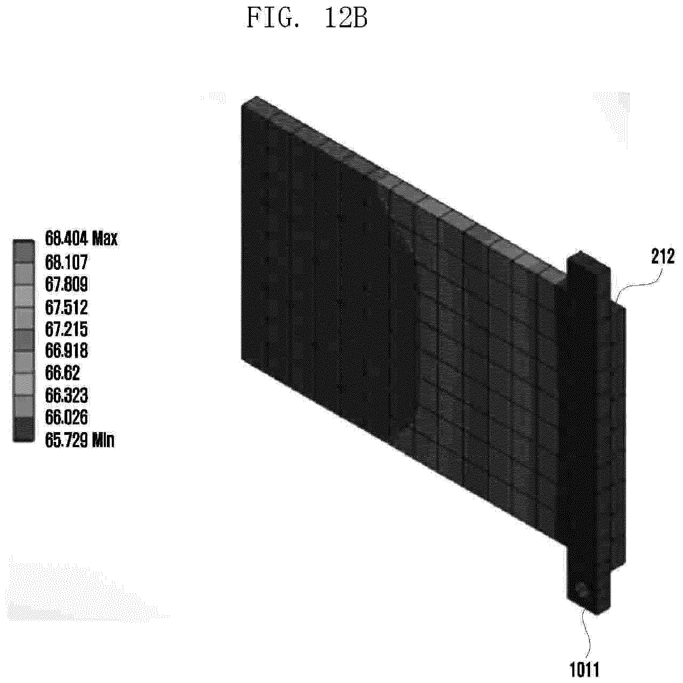

With reference to FIG. 12b, in the case that the first thermal diffusion plate 1011 of the thermal diffusion member 1010 is disposed on the first support member 212, it may be confirmed that the temperature of the first support member 212 (or the internal temperature of the electronic device 500) is measured at about 65°C~66°C.

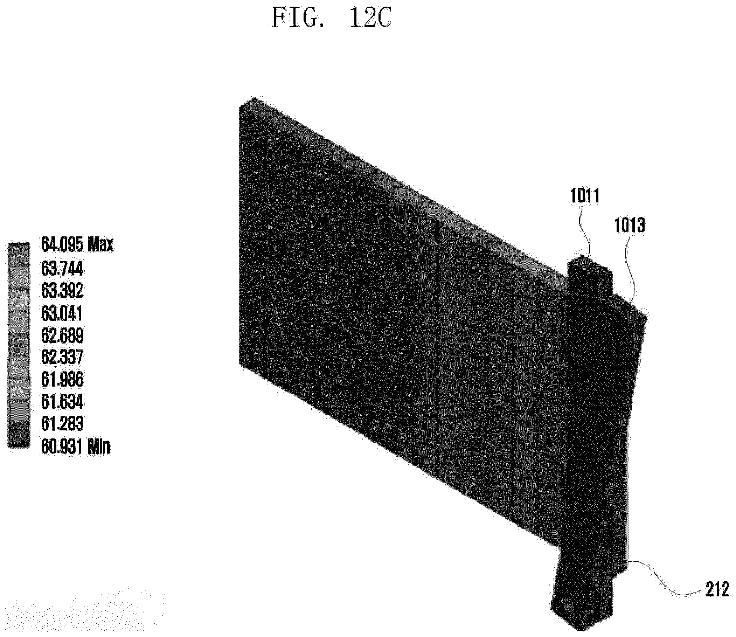

With reference to FIG. 12c, in the case that the first thermal diffusion plate 1011 of the thermal diffusion member 1010 is coupled to the first support member 212, and the second thermal diffusion plate 1013 is disposed at a designated distance from the first thermal diffusion plate 1011, it may be confirmed that the temperature of the first support member 212 (or the internal temperature of the electronic device 500) is measured at about 60°C~61°C.

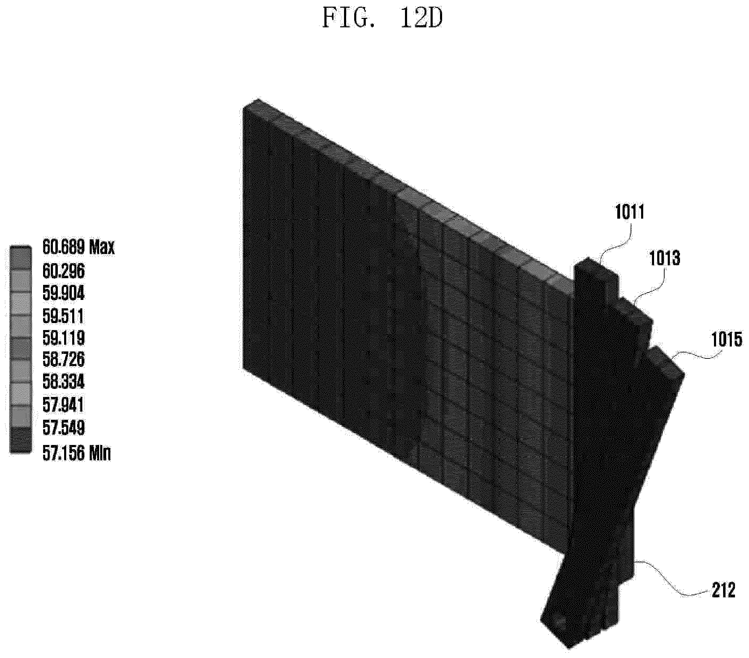

With reference to FIG. 12d, in the case that the first thermal diffusion plate 1011 of the thermal diffusion member 1010 is coupled to the first support member 212, and the second thermal diffusion plate 1013 and the third thermal diffusion plate 1015 are each disposed at a predetermined interval, it may be confirmed that the temperature of the first support member 212 (or the internal temperature of the electronic device 500) is measured at about 57.1°C~57.5°C.

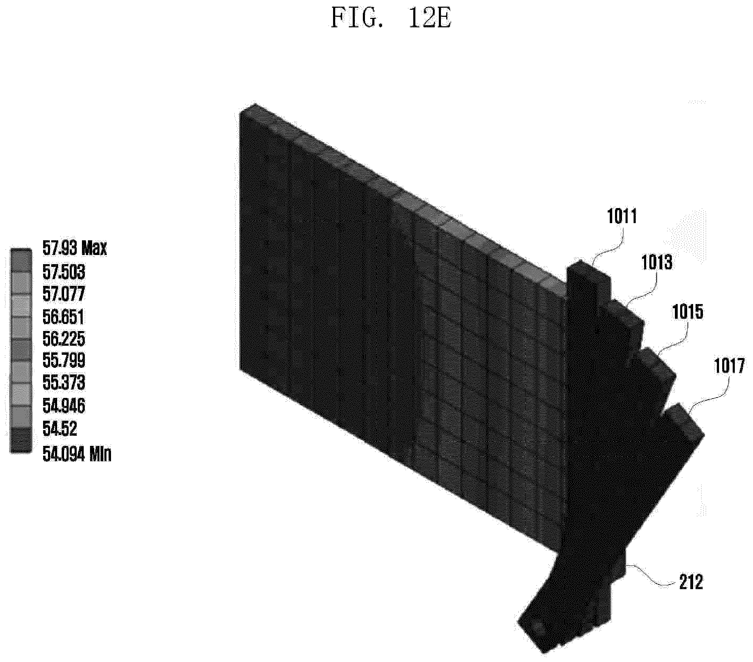

With reference to FIG. 12e, in the case that the first thermal diffusion plate 1011 of the thermal diffusion member 1010 is coupled to the first support member 212, and the second thermal diffusion plate 1013, the third thermal diffusion plate 1015, and the fourth thermal diffusion plates 1017 are each disposed at a predetermined interval, the temperature of the first support member 212 (or the internal temperature of the electronic device 500) is measured at about 54°C~54.5°C.

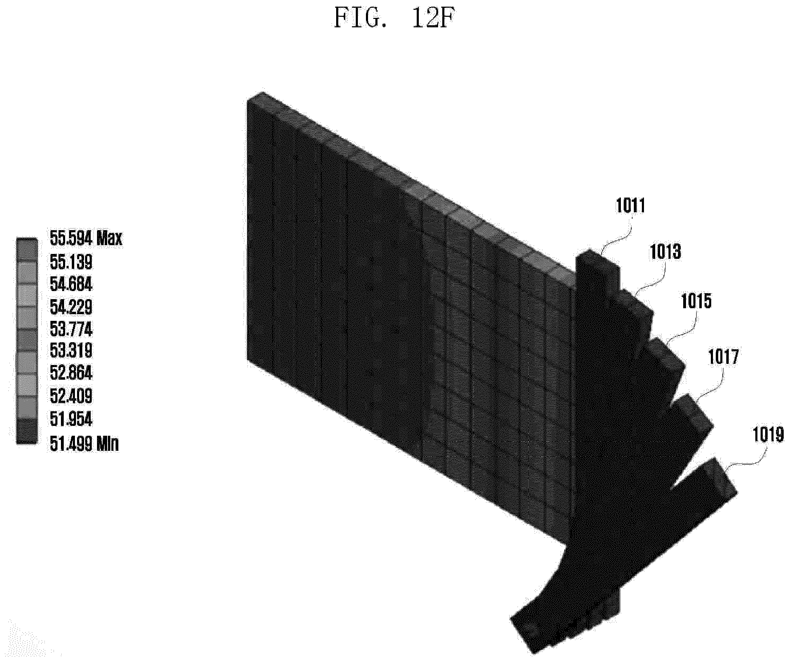

With reference to FIG. 12f, in the case that the first thermal diffusion plate 1011 of the thermal diffusion member 1010 is coupled to the first support member 212, and the second thermal diffusion plate 1013, the third thermal diffusion plate 1015, the fourth thermal diffusion plate 1017, and the fifth thermal diffusion plate 1019 are each disposed at a predetermined interval, the temperature of the first support member 212 (or the internal temperature of the electronic device 500) may be measured at about 51°C~51.9°C.

According to various embodiments, as the number of thermal diffusion plates constituting the thermal diffusion member 1010 increases, heat generated from the heat-generating component 510 may be more rapidly diffused and/or dissipated.

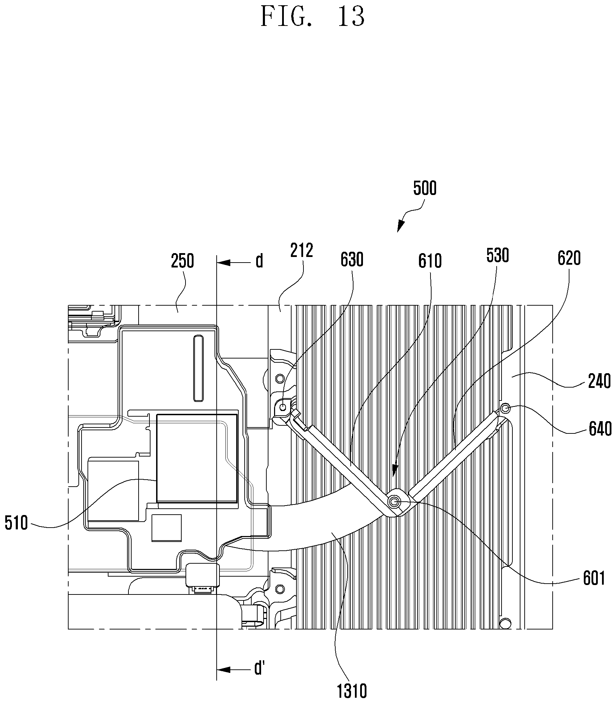

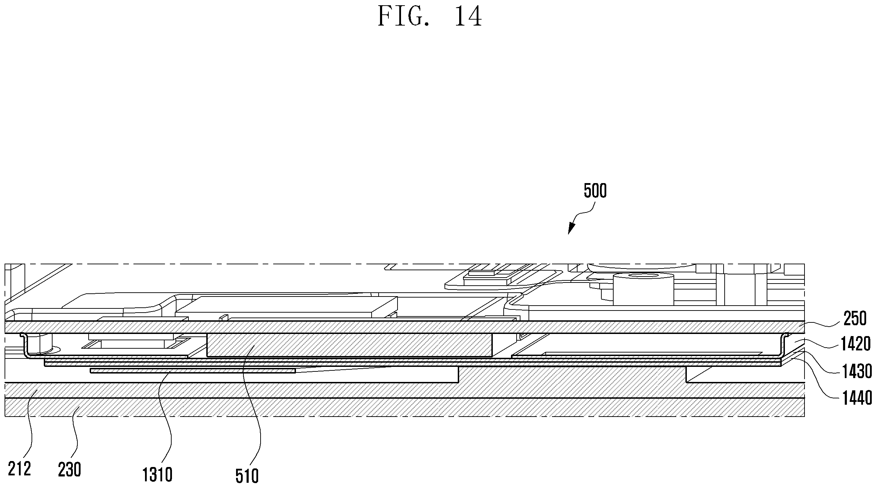

FIG. 13 is a diagram schematically illustrating various embodiments of a thermal diffusion member of an electronic device according to various embodiments not covered by the claimed invention. FIG. 14 is a diagram schematically illustrating a cross section of the electronic device disclosed in FIG. 13 along line d-d'.

In the description of FIGS. 13 and 14, the same reference numerals are assigned to the same configuration as the embodiments disclosed in the electronic device 200 of FIGS. 2a to 4 and the electronic device 500 of FIGS. 5 to 11 described above, and redundant descriptions of the functions may be omitted.

With reference to FIG. 13, an electronic device 500 may include a sliding driving unit 530 and a thermal diffusion member 1310.

According to an embodiment, a first end (e.g., one end) of the sliding driving unit 530 may be coupled to the first support member 212 of the first housing 210, and a second end (e.g., the other end) of the sliding driving unit 530 may be coupled to one side surface of the sliding plate 240.

According to an embodiment, the sliding driving unit 530 may include a shaft 601, a first link 610, a second link 620, a first joint 630, and a second joint 640. The shaft 601 may rotatably couple the first link 610 and the second link 620. A first end of the first link 610 may be coupled to the first support member 212 using a first joint 630. A second end of the first link 610 may be rotatably coupled to the shaft 601. A first end of the second link 620 may be rotatably coupled to the shaft 601. A second end of the second link 620 may be coupled to one side surface of the sliding plate 240 using a second joint 640. The thermal diffusion member 1310 may be folded or unfolded in conjunction with the sliding driving unit 530.

According to an embodiment, the thermal diffusion member 1310 may be disposed between the first support member 212 and the sliding driving unit 530. The thermal diffusion member 1310 may be disposed between the first support member 212 and the first link 610. The thermal diffusion member 1310 may include a semicircular curved line or surface.

According to various embodiments, one end of the thermal diffusion member 1310 may be coupled to the first link 610. The other end of the thermal diffusion member 1310 is slid out between the first support member 212 and the printed circuit board 250 in accordance with the sliding-out operation of the sliding driving unit 530, and the heat generated from the heat-generating component 510 may be diffused and dissipated to the outside of the electronic device 500. The other end of the thermal diffusion member 1310 may be slid in between the first support member 212 and the printed circuit board 250 in accordance with the sliding-in operation of the sliding driving unit 530. The thermal diffusion member 1310 may be made of a material having high thermal conductivity. The thermal diffusion member 1310 may include at least one of a heat pipe and a vapor chamber.

With reference to FIG. 14, the electronic device 500 may include a printed circuit board 250, a heat-generating component 510, a shield can 1420, a heat transfer member 1430, a heat dissipation member 1440, a thermal diffusion member 1310, a first support member 212, and/or a flexible display 230. Components disclosed in FIG. 14 may also be applied to the electronic device 200 of FIGS. 2a to 4 and the electronic device 500 of FIGS. 5 to 11 described above.

According to an embodiment, a heat-generating component 510 may be disposed on one surface of the printed circuit board 250. The heat-generating component 510 may be disposed on one surface of the printed circuit board 250 using an electrically conductive pad (not shown). The heat-generating component 510 may be disposed between the printed circuit board 250 and the first support member 212.

According to an embodiment, the shield can 1420 may be disposed to surround at least a portion of the heat-generating component 510. The shield can 1420 may be disposed on one surface of the printed circuit board 250. The shield can 1420 may be coupled to one surface of the printed circuit board 250 through soldering or bonding. The shield can 1420 may shield heat or electromagnetic waves generated from the heat-generating component 510 mounted on the printed circuit board 250. The shield can 1420 may be made of a metal material having high thermal conductivity, such as copper or aluminum.

According to an embodiment, the heat transfer member 1430 may be disposed on one surface of the shield can 1420. The heat transfer member 1430 may be disposed above the heat-generating component 510. The heat transfer member 1430 may transfer and/or dissipate heat generated from the heat-generating component 510 mounted on the printed circuit board 250 toward the heat dissipation member 1440. The heat transfer member 1430 may absorb heat generated from the heat-generating component 510 or transfer it toward the heat dissipation member 1440 to cool it. The heat transfer member 1430 may include at least one of a thermal interface material (TIM) tape or graphite.

According to an embodiment, the heat dissipation member 1440 may be disposed on one surface of the heat transfer member 1430. The heat dissipation member 1440 may be coupled to one surface of the heat transfer member 1430 through an adhesive sheet or bonding. The heat dissipation member 1440 may diffuse and dissipate heat generated from the heat-generating component 510 by transferring it to at least a portion of the first support member 212 and/or the thermal diffusion member 1310. The heat dissipation member 1440 may include at least one of a nano fiber sheet, a nano form sheet, a copper (CU) sheet, and an aluminum (AL) sheet.

According to an embodiment, the thermal diffusion member 1310 may be slid out between the heat dissipation member 1440 and the first support member 212 in accordance with the sliding-out operation of the sliding driving unit 530. The thermal diffusion member 1310 may be slid in between the heat dissipation member 1440 and the first support member 212 in accordance with the sliding-in operation of the sliding driving unit 530. The thermal diffusion member 1310 may diffuse and/or dissipate the heat generated from the heat-generating component 510 to the outside of the electronic device 500 by being slid out between the heat dissipating member 1440 and the first support member 212 in accordance with the sliding-out operation of the sliding driving unit 530.

According to an embodiment, the first support member 212 may support at least a portion of the flexible display 230.

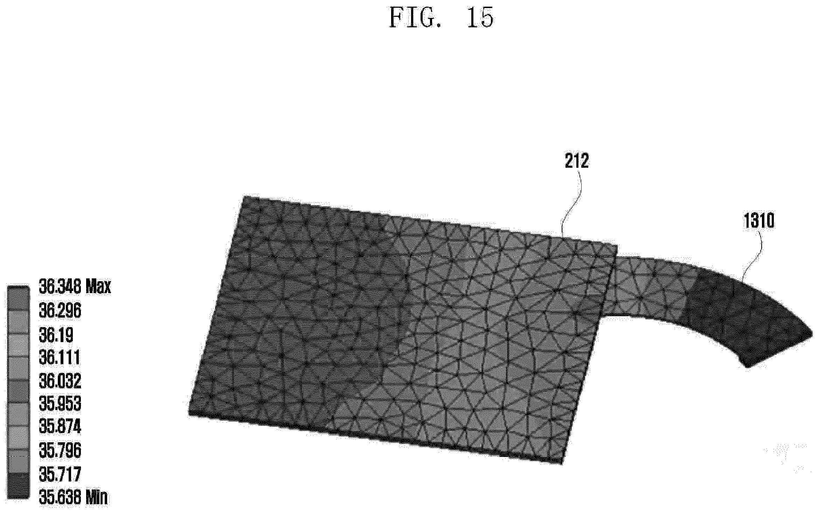

FIG. 15 is a diagram illustrating a temperature change of the thermal diffusion member of FIG. 13.

According to an embodiment, the thermal diffusion member 1310 may diffuse and/or dissipate the heat generated from the heat-generating component 510 to the outside of the electronic device 500 by being slid out between the heat dissipating member **1440** and the first support member 212 in conjunction with the first link 610 as the sliding driving unit 530 performs a sliding-out operation.

With reference to FIG. 15, it may be confirmed that the temperature of the first support member 212 of the electronic device 500 is measured at about 36°C and the temperature of a portion of the thermal diffusion member 1310 slid in between the heat dissipation member **1440** and the first support member 212 is measured at about 35.6°C.

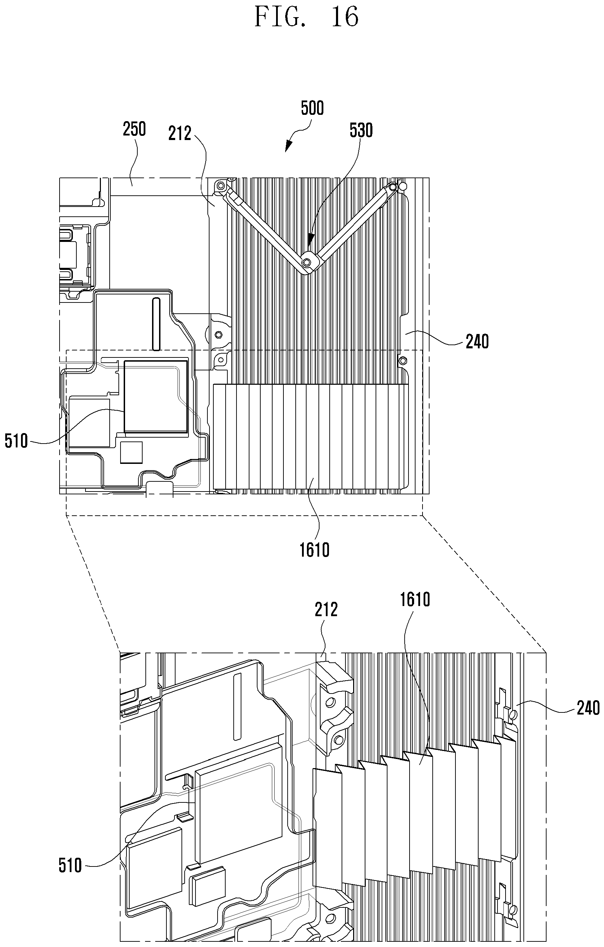

FIG. 16 is a diagram schematically illustrating various embodiments of a thermal diffusion member of an electronic device according to various embodiments.

In the description of FIG. 16, the same reference numerals are assigned to the same configuration as the embodiments disclosed in the electronic device 200 of FIGS. 2a to 4 and the electronic device 500 of FIGS. 5 to 14 described above, and redundant descriptions of the functions may be omitted.

According to various embodiments, the thermal diffusion member 1610 of the embodiment disclosed in FIG. 16 may be applied to the electronic device 200 of FIGS. 2a to 4 and the electronic device 500 of FIGS. 5 to 14 described above.

With reference to FIG. 16, the thermal diffusion member 1610 of the electronic device 500 may be additionally disposed in a portion where the sliding driving unit 530 does not exist. The thermal diffusion member 1610 may be applied to, for example, a sliding driving unit that performs a linear motion. The thermal diffusion member 1610 may have one end coupled to the first support member 212 and the other end coupled to one side surface of the sliding plate 240.

According to various embodiments, the thermal diffusion member 1610 may further diffuse and/or dissipate the heat generated from the heat-generating component 510 more quickly to the outside of the electronic device 500 together with the thermal diffusion member 540 (e.g., the thermal diffusion member 540 of FIG. 5) disposed on the first support member 212 and the first link 610 of the sliding driving unit 530.

In the above, the present invention has been described according to various embodiments of the present disclosure, but it is natural that changes and modifications made by those skilled in the art within the scope of the present invention also belong to the present invention.

## Claims

1. An electronic device (500) comprising:
a first housing (210) including a first support member (212) and a second support member (222);
a second housing (220) slidably coupled to the first housing (210);
a sliding plate (240) having a first end coupled to the first support member (212), and having a second end arranged to slide at least partially in the second housing (220);
a printed circuit board (250) which is arranged between the first support member (212) and the second support member (222), and which has at least one heat-generating component (510) mounted on one surface thereof;
a sliding driving unit (530), which is arranged on an inner surface of the sliding plate (240), has a first end coupled to the first support member (212), and has a second end coupled to one side surface of the sliding plate (240);
a thermal diffusion member (540, 1010) having a first side surface (641) coupled to the first support member (212) and a second side surface (642) coupled to at least a portion of the sliding driving unit (530), and diffusing heat generated from the at least one heat-generating component (510); and
a flexible display (230) supported by the first support member (212) and the sliding plate (240),
wherein the thermal diffusion member (540, 1010) is formed to be unfolded according to a sliding-out operation of the sliding driving unit (530).

2. The electronic device of claim 1, wherein the sliding driving unit (530) comprises:
a shaft (601);
a first link (610) having a first end coupled to the first support member (212) using a first joint (630) and having a second end rotatably coupled to the shaft (601); and
a second link (620) having a first end rotatably coupled to the shaft (601) and a second end coupled to the one side surface of the sliding plate (240) using a second joint (640).

3. The electronic device of claim 2, wherein the thermal diffusion member (540) is configured so that the first side surface (641) is coupled to the first support member (212) and the second side surface (642) is coupled to the first link (610).

4. The electronic device of claims 1 to 3, wherein the thermal diffusion member (540) comprises a foldable graphite sheet.

5. The electronic device of claims 2 to 4, wherein a first end (645) of the thermal diffusion member (540) is configured to be fixedly coupled to the first joint (630), and a second end (646) of the thermal diffusion member (540) is configured to perform a folding or unfolding operation.

6. The electronic device of claims 5, wherein the thermal diffusion member (540) comprises an opening (647) formed by removing a portion of the first end (645); and an extension portion (649) extending from the first side surface (641) and configured to cover the at least one heat-generating component (510).

7. The electronic device of claims 5 to 6, wherein the thermal diffusion member (540) comprises a zigzag shape having at least one first folding part (810) provided at an upper part of the second end (646) and at least one second folding part (820) provided at a lower part of the second end (646), but each end of the first folding part (810) and the second folding part (820) are configured to have a curved shape.

8. The electronic device of claims 2 to 7, wherein the thermal diffusion member (540) is configured to be further disposed between the first link (610) and the second link (620) and between the second link (620) and the one side surface of the sliding plate (240)

9. The electronic device of claim 2, wherein the thermal diffusion member (1010) comprises a plurality of thermal diffusion plates (1011, 1013, 1015, 1017, 1019).

10. The electronic device of claim 9, wherein the plurality of thermal diffusion plates (1011, 1013, 1015, 1017, 1019) is configured so that one end of each of the plurality of thermal diffusion plates (1011, 1013, 1015, 1017, 1019) is fixedly coupled to the first joint (630) and the other end of each of the plurality of thermal diffusion plates (1011, 1013, 1015, 1017, 1019) performs a folding or unfolding operation.

11. The electronic device of claims 9 to 10, wherein the plurality of thermal diffusion plates (1011, 1013, 1015, 1017, 1019) is configured to be unfolded at equal or different intervals as the first link (610) and the second link (620) of the sliding driving unit perform a sliding-out operation.

12. The electronic device of claims 1 to 11, comprising an additional thermal diffusion member (1610) disposed in a portion where the sliding driving unit (530) does not exist, and configured so that one end is coupled to the first support member (212) and the other end is coupled to the one side surface of the sliding plate (240).

13. The electronic device of claims 1 to 12, wherein the at least one heat-generating component (510) comprises an application processor, a communication processor, a power amplifier, and/or an inductor.

14. The electronic device of claim 1, further comprising:
a wireless power receiving circuit (520) disposed on one surface of the second support member (222); and
a battery (251) disposed between the first support member (212) and the second support member (222),
wherein the wireless power receiving circuit (520) is configured to wirelessly receive power necessary for charging the electronic device (500) and supply the received power to the battery (251).

## Patentansprüche

1. Elektronische Vorrichtung (500), umfassend:
ein erstes Gehäuse (210), das ein erstes Trägerelement (212) und ein zweites Trägerelement (222) umfasst;
ein zweites Gehäuse (220), das verschiebbar mit dem ersten Gehäuse (210) gekoppelt ist;
eine Gleitplatte (240), die ein erstes Ende, das mit dem ersten Trägerelement (212) gekoppelt ist, und ein zweites Ende aufweist, das so angeordnet ist, dass es zumindest teilweise in dem zweiten Gehäuse (220) gleitet;
eine Leiterplatte (250), die zwischen dem ersten Trägerelement (212) und dem zweiten Trägerelement (222) angeordnet ist, und die mindestens eine wärmeerzeugende Komponente (510) aufweist, die auf einer Fläche davon angebracht ist;
eine gleitende Antriebseinheit (530), die auf einer Innenfläche der Gleitplatte (240) angeordnet ist, und ein erstes Ende, das mit dem ersten Trägerelement (212) gekoppelt ist, und ein zweites Ende aufweist, das mit einer Seitenfläche der Gleitplatte (240) gekoppelt ist;
ein Wärmediffusionselement (540, 1010), das eine erste Seitenfläche (641), die mit dem ersten Trägerelement (212) gekoppelt ist, und eine zweite Seitenfläche (642) aufweist, die mit mindestens einem Abschnitt der gleitenden Antriebseinheit (530) gekoppelt ist, und das die von der mindestens einen wärmeerzeugenden Komponente (510) erzeugte Wärme verteilt; und
eine flexible Anzeige (230), die in dem ersten Trägerelement (212) und der Gleitplatte (240) getragen wird;
wobei das Wärmediffusionselement (540, 1010) so ausgebildet ist, dass es gemäß einem Vorgang des Herausgleitens der gleitenden Antriebseinheit (530) auseinandergefaltet wird.

2. Elektronische Vorrichtung nach Anspruch 1, wobei die gleitende Antriebseinheit (530) Folgendes umfasst:
eine Welle (601);
ein erstes Verbindungsglied (610), dessen erstes Ende über ein erstes Gelenk (630) mit dem ersten Trägerelement (212) gekoppelt ist und dessen zweites Ende drehbar mit der Welle (601) gekoppelt ist; und
ein zweites Verbindungsglied (620), dessen erstes Ende drehbar mit der Welle (601) gekoppelt ist und dessen zweites Ende über ein zweites Gelenk (640) mit der einen Seitenfläche der Gleitplatte (240) gekoppelt ist.

3. Elektronische Vorrichtung nach Anspruch 2, wobei das Wärmediffusionselement (540) so konfiguriert ist, dass die erste Seitenfläche (641) mit dem ersten Trägerelement (212) gekoppelt ist und die zweite Seitenfläche (642) mit dem ersten Verbindungsglied (610) gekoppelt ist.

4. Elektronische Vorrichtung nach den Ansprüchen 1 bis 3, wobei das Wärmediffusionselement (540) eine faltbare Graphitplatte umfasst.

5. Elektronische Vorrichtung nach den Ansprüchen 2 bis **4,** wobei ein erstes Ende (645) des Wärmediffusionselements (540) so konfiguriert ist, dass es fest mit dem ersten Gelenk (630) gekoppelt ist, und ein zweites Ende (646) des Wärmediffusionselements (540) so konfiguriert ist, dass es einen Vorgang des Faltens oder Entfaltens durchführt.

6. Elektronische Vorrichtung nach Anspruch 5, wobei das Wärmediffusionselement (540) eine Öffnung (647) umfasst, die durch Entfernen eines Abschnitts des ersten Endes (645) ausgebildet ist; und einen Verlängerungsabschnitt (649), der sich von der ersten Seitenfläche (641) erstreckt und so konfiguriert ist, dass er die mindestens eine wärmeerzeugende Komponente (510) abdeckt.

7. Elektronische Vorrichtung nach den Ansprüchen 5 bis 6, wobei das Wärmediffusionselement (540) eine Zickzackform mit mindestens einem ersten Faltteil (810), der an einem oberen Teil des zweiten Endes (646) vorgesehen ist, und mindestens einem zweiten Faltteil (820), der an einem unteren Teil des zweiten Endes (646) vorgesehen ist, umfasst, wobei jedoch jedes Ende des ersten Faltteils (810) und des zweiten Faltteils (820) so konfiguriert ist, dass es eine gekrümmte Form aufweist.

8. Elektronische Vorrichtung nach den Ansprüchen 2 bis 7, wobei das Wärmediffusionselement (540) so konfiguriert ist, dass es ferner zwischen dem ersten Verbindungsglied (610) und dem zweiten Verbindungsglied (620) und zwischen dem zweiten Verbindungsglied (620) und der einen Seitenfläche der Gleitplatte (240) angeordnet ist.

9. Elektronische Vorrichtung nach Anspruch 2, wobei das Wärmediffusionselement (1010) eine Vielzahl von Wärmediffusionsplatten (1011, 1013, 1015, 1017, 1019) umfasst.

10. Elektronische Vorrichtung nach Anspruch 9, wobei die Vielzahl von Wärmediffusionsplatten (1011, 1013, 1015, 1017, 1019) so konfiguriert ist, dass ein Ende jeder der Vielzahl von Wärmediffusionsplatten (1011, 1013, 1015, 1017, 1019) fest mit dem ersten Gelenk (630) gekoppelt ist und das andere Ende jeder der Vielzahl von Wärmediffusionsplatten (1011, 1013, 1015, 1017, 1019) einen Falt- oder Entfaltungsvorgang durchführt.

11. Elektronische Vorrichtung nach Anspruch 9 bis 10, wobei die Vielzahl von Wärmediffusionsplatten (1011, 1013, 1015, 1017, 1019) so konfiguriert ist, dass sie in gleichen oder unterschiedlichen Intervallen auseinandergefaltet werden, wenn das erste Verbindungsglied (610) und das zweite Verbindungsglied (620) der gleitenden Antriebseinheit einen Vorgang des Herausgleitens durchführen.

12. Elektronische Vorrichtung nach den Ansprüchen 1 bis 11, ein zusätzliches Wärmediffusionselement (1610) umfassend, das in einem Abschnitt angeordnet ist, in dem die gleitende Antriebseinheit (530) nicht vorhanden ist, und so konfiguriert ist, dass ein Ende mit dem ersten Trägerelement (212) gekoppelt ist und das andere Ende mit der einen Seitenfläche der Gleitplatte (240) gekoppelt ist.

13. Elektronische Vorrichtung nach Anspruch 1 bis 12, wobei die mindestens eine wärmeerzeugende Komponente (510) einen Anwendungsprozessor, einen Kommunikationsprozessor, einen Leistungsverstärker und/oder einen Induktor umfasst.

14. Elektronische Vorrichtung nach Anspruch 1, ferner umfassend:
eine drahtlose Energieempfangsschaltung (520), die auf einer Fläche des zweiten Trägerelements (222) angeordnet ist; und
eine Batterie (251), die zwischen dem ersten Trägerelement (212) und dem zweiten Trägerelement (222) angeordnet ist,
wobei die drahtlose Energieempfangsschaltung (520) konfiguriert ist, um drahtlos Energie zu empfangen, die zum Laden der elektronischen Vorrichtung (500) erforderlich ist, und die empfangene Energie an die Batterie (251) zu liefern.

## Revendications

1. Dispositif électronique (500), comprenant :
un premier boîtier (210) comprenant un premier élément de support (212) et un second élément de support (222) ;
un deuxième boîtier (220) couplé de manière coulissante au premier boîtier (210) ;
une plaque coulissante (240) présentant une première extrémité couplée au premier élément de support (212), et présentant une seconde extrémité disposée pour coulisser au moins partiellement dans le second boîtier (220) ;
une carte de circuit imprimé (250) disposée entre le premier élément de support (212) et le second élément de support (222) et comportant au moins un composant générateur de chaleur (510) monté sur une de ses surfaces ;
une unité d'entraînement de coulissement (530), qui est disposée sur une surface intérieure de la plaque coulissante (240), a une première extrémité couplée au premier élément de support (212), et a une second extrémité couplée à une surface latérale de la plaque coulissante (240) ;
un élément de diffusion thermique (540, 1010) présentant une première surface latérale (641) couplée au premier élément de support (212) et une seconde surface latérale (642) couplée à au moins une partie de l'unité d'entraînement de coulissement (530), et diffusant la chaleur générée par l'au moins un composant générant de chaleur (510) ; et
un affichage flexible (230) soutenu par le premier élément de support (212) et la plaque coulissante (240),
dans lequel l'élément de diffusion thermique (540, 1010) est formé pour être déplié selon une opération de sortie par glissement de l'unité d'entraînement de coulissement (530).

2. Dispositif électronique de la revendication 1, dans lequel l'unité d'entraînement de coulissement (530) comprend :
un arbre (601) ;
un premier lien (610) dont la première extrémité est couplée au premier élément de support (212) au moyen d'une première articulation (630) et dont la seconde extrémité est couplée de manière rotative à l'arbre (601) ; et
un second lien (620) ayant une première extrémité couplée de manière rotative à l'arbre (601) et une seconde extrémité couplée à l'une surface latérale de la plaque coulissante (240) à l'aide d'une seconde articulation (640).

3. Dispositif électronique de la revendication 2, dans lequel l'élément de diffusion thermique (540) est configuré de sorte que la première surface latérale (641) est couplée au premier élément de support (212) et que la seconde surface latérale (642) est couplée au premier lien (610).

4. Dispositif électronique des revendications 1 à 3, dans lequel l'élément de diffusion thermique (540) comprend une feuille de graphite pliable.

5. Dispositif électronique des revendications 2 à 4, dans lequel une première extrémité (645) de l'élément de diffusion thermique (540) est configurée pour être couplée de manière fixe à la première articulation (630), et une seconde extrémité (646) de l'élément de diffusion thermique (540) est configurée pour effectuer une opération de pliage ou de dépliage.

6. Dispositif électronique de la revendication 5, dans lequel l'élément de diffusion thermique (540) comprend une ouverture (647) formée en retirant une partie de la première extrémité (645) ; et une partie d'extension (649) s'étendant à partir de la première surface latérale (641) et configurée pour couvrir l'au moins un composant générateur de chaleur (510).

7. Dispositif électronique des revendications 5 à 6, dans lequel l'élément de diffusion thermique (540) comprend une forme en zigzag ayant au moins une première partie de pliage (810) prévue à un niveau supérieur de la deuxième extrémité (646) et au moins une deuxième partie de pliage (820) prévue à un niveau inférieur de la deuxième extrémité (646), mais chaque extrémité de la première partie de pliage (810) et de la deuxième partie de pliage (820) sont configurées pour avoir une forme incurvée.

8. Dispositif électronique des revendications 2 à 7, dans lequel l'élément de diffusion thermique (540) est configuré pour être disposé en outre entre le premier lien (610) et le second lien (620) et entre le second lien (620) et l'une surface latérale de la plaque coulissante (240).

9. Dispositif électronique de la revendication 2, dans lequel l'élément de diffusion thermique (1010) comprend une pluralité de plaques de diffusion thermique (1011, 1013, 1015, 1017, 1019).

10. Dispositif électronique de la revendication 9, dans lequel la pluralité de plaques de diffusion thermique (1011, 1013, 1015, 1017, 1019) est configurée de sorte qu'une extrémité de chacune des plaques de diffusion thermique (1011, 1013, 1015, 1017, 1019) est couplée de manière fixe à la première articulation (630) et que l'autre extrémité de chacune des plaques de diffusion thermique (1011, 1013, 1015, 1017, 1019) effectue une opération de pliage ou de dépliage.

11. Dispositif électronique des revendications 9 à 10, dans lequel la pluralité de plaques de diffusion thermique (1011, 1013, 1015, 1017, 1019) est configurée pour être dépliée à des intervalles égaux ou différents lorsque le premier lien (610) et le second lien (620) de l'unité d'entraînement de coulissement effectuent une opération de sortie par glissement.

12. Dispositif électronique des revendications 1 à 11, comprenant un élément de diffusion thermique supplémentaire (1610) disposé dans une partie où l'unité d'entraînement de coulissement (530) n'existe pas, et configuré de telle sorte qu'une extrémité est couplée au premier élément de support (212) et que l'autre extrémité est couplée à la surface latérale de la plaque coulissante (240).

13. Dispositif électronique des revendications 1 à 12, dans lequel l'au moins un composant générateur de chaleur (510) comprend un processeur d'application, un processeur de communication, un amplificateur de puissance, et/ou un inducteur.

14. Dispositif électronique de la revendication 1, comprenant en outre :
un circuit de réception de puissance sans fil (520) disposé sur une surface du second élément de support (222) ; et
une batterie (251) disposée entre le premier élément de support (212) et le second élément de support (222),
dans lequel le circuit de réception de puissance sans fil (520) est configuré pour recevoir sans fil la puissance nécessaire à la recharge du dispositif électronique (500) et fournir l'alimentation reçue à la batterie (251).
